# EUROPÄISCHE PATENTSCHRIFT

(11) **EP 2 591 519 B1**
(45) Veröffentlichungstag und Bekanntmachung des Hinweises auf die Patenterteilung: **09.09.2015**
(21) Anmeldenummer: 11720403.2
(22) Anmeldetag: 19.05.2011
(51) Int. Cl.: H01M 2/02, H01M 2/26, H01M 2/04, H01M 2/08, H01M 10/04, H01M 10/05, H01M 10/052, H01M 10/058

(54) **GALVANISCHE ZELLE**
GALVANIC CELL
CELLULE GALVANIQUE

(30) Priorität: 05.07.2010 DE 102010026093
(43) Veröffentlichungstag der Anmeldung: 15.05.2013
(73) Patentinhaber: Li-Tec Battery GmbH, 01917 Kamenz (DE)
(72) Erfinder: LEGNER, Steffen, 73479 Ellwangen (DE)
(74) Vertreter: JENSEN & SON
(86) Internationale Anmeldenummer: PCT/EP2011/002511
(87) Internationale Veröffentlichungsnummer: WO 2012/003902

(56) Entgegenhaltungen:
- EP-A1- 1 744 384
- DE-A1- 4 316 424
- DE-A1- 19 714 953
- JP-A- 11 345 604
- JP-A- 2001 250 517
- JP-A- 2002 100 342
- US-A1- 2006 172 190

## Beschreibung

Die vorliegende Erfindung betrifft eine galvanische Zelle.

Es sind Galvanische Zellen wie etwa Batterien (Primärspeicher) und Akkumulatoren (Sekundärspeicher) zur Speicherung elektrischer Energie bekannt, die aus einer oder mehreren Speicherzellen aufgebaut sind, in denen bei Anlegen eines Ladestroms elektrische Energie in einer elektrochemischen Ladereaktion zwischen einer Kathode und einer Anode in bzw. zwischen einem Elektrolyten in chemische Energie umgewandelt und somit gespeichert wird und in denen bei Anlegen eines elektrischen Verbrauchers chemische Energie in einer elektrochemischen Entladereaktion in elektrische Energie umwandelt wird. Dabei werden Primärspeicher in der Regel nur ein Mal aufgeladen und sind nach Entladung zu entsorgen, während Sekundärspeicher mehrere (von einigen 100 bis über 10.000 Zyklen) von Aufladung und Entladung erlauben. Es ist dabei anzumerken, dass auch Akkumulatoren insbesondere im Fahrzeugbereich als Batterien bezeichnet werden.

In den letzten Jahren gewinnen Primär- und Sekundärspeicher auf der Basis von Lithiumverbindungen an Bedeutung. Diese weisen eine hohe Energiedichte und thermische Stabilität auf, liefern eine konstante Spannung bei geringer Selbstentladung und sind frei von dem sogenannten Memory-Effekt. Das allgemeine Funktionsprinzip einer Lithium-Ionen-Zelle ist gut bekannt; es sei an dieser Stelle auf allgemein zugängliche Quellen wie etwa www.wikipedia.de unter dem Stichwort "Lithium-Ionen-Akkumulator" mit weiterführenden Verweisungen Bezug genommen.

Aus dem Stand der Technik sind sogenannte Rahmenflachzellen bekannt. Solche Zelle sind etwa aus der DE 10 2007 063 181 A1 oder der DE 10 2008 010 814 A1 bekannt. Dabei ist ein aktiver Teil der Zelle, der einen Folienstapel mit einer Mehrzahl von Folien mit Materialien, die beispielsweise als Elektrode (Anode, Kathode), Stromsammler bzw. Kollektor (Anodenkollektor, Kathodenkollektor) und Separator wirken, aufweist, von einem umlaufenden Rahmen umgeben, dessen Flachseiten durch flache Blechteile verschlossen sind. Ableiterfahnen (Verlängerungen der Kollektorfolien an den jeweiligen Stirnseiten) des aktiven Teils werden durch Abschnitte des Rahmens an die Blechteile gepresst, und die flachen Blechteile bilden Polkontakte der Zelle.

Für zylindrische Zellen ist aus der EP 1 610 401 B9 bekannt, Endlosfolien so herzustellen und zu wickeln, dass freie Enden von Anodenkollektorfolien auf einer Stirnseite des Wickels abstehen und freie Enden von Kathodenkollektorfolien auf einer gegenüberliegenden Stirnseite des Wickels abstehen, und den Wickel so in einem zylindrischen Gehäuse zu montieren, dass die freien Kollektorfolienenden durch federnde Deckel kontaktiert werden.

Es ist eine Aufgabe der vorliegenden Erfindung, den Aufbau nach dem Stand der Technik zu verbessern.

Die Aufgabe wird durch die Merkmale des unabhängigen Anspruchs gelöst. Vorteilhafte Weiterbildungen der Erfindung bilden den Gegenstand der Unteransprüche.

Eine Galvanische Zelle nach der Erfindung ist ausgestattet mit einem aktiven Teil, einer Einhausung zur Aufnahme des aktiven Teils, und wenigstens zwei Polkontaktbereichen zur Kontaktierung des aktiven Teils von außerhalb der Einhausung, wobei der aktive Teil eine flache Folienanordnung mit elektrochemisch aktiven Materialien aufweist, wobei die Folienanordnung wenigstens eine erste Kollektorfolie und eine zweite Kollektorfolie aufweist, wobei die Einhausung ein erstes Einhausungsteil, das sich wenigstens im Wesentlichen entlang einer ersten Flachseite des aktiven Teils erstreckt, und ein zweites Einhausungsteil, das sich wenigstens im Wesentlichen entlang einer zweiten Flachseite des aktiven Teils erstreckt, aufweist, wobei das erste Einhausungsteil und das zweite Einhausungsteil den aktiven Teil aufnehmen, und wobei die Polkontaktbereiche jeweils mit den ersten oder den zweiten Kollektorfolien verbunden und von außerhalb der Einhausung kontaktierbar sind. Erfindungsgemäß ist wenigstens eines bzw. sind vorzugsweise beide des ersten und des zweiten Einhausungsteils ein mittels eines Umformverfahrens hergestelltes, vorzugsweise tiefgezogenes Bauteil. Vorzugsweise besteht wenigstens eines des ersten oder zweiten Bauteils aus Blech oder Kunststoff, besonders bevorzugt aus Stahl-, Aluminium- oder Kupferblech. Die Polkontaktbereiche sind durch Ableiter gebildet, die sich jeweils durch eine Nahtstelle zwischen dem ersten und dem zweiten Einhausungsteil hindurch erstrecken und die vorzugsweise gegen die Einhausungsteile isoliert sind. Die Ableiter erstrecken sich die außerhalb der Einhausung entlang einer Oberfläche wenigstens eines der Einhausungsteile.

Unter einer galvanischen Zelle kann im Sinne der Erfindung jede Vorrichtung verstanden werden, welche auch zur Abgabe elektrischer Energie ausgelegt und eingerichtet ist. Es kann sich insbesondere, aber nicht nur, um eine elektrochemische Speicherzelle vom primären oder sekundären Typ (Batterie- oder Akkumulatorzelle), eine Brennstoffzelle oder eine Kondensatorzelle handeln. Unter einem aktiven Teil wird dabei derjenige Teil verstanden, innerhalb dessen auch elektrochemische Lade-, Entlade- und ggf. Umwandlungsvorgänge elektrischer Energie stattfinden. Der aktive Teil weist vorzugsweise Folienschichten aus elektrochemisch aktiven Materialien (Elektroden), leitenden Materialien (Stromsammler) und trennenden Materialien (Separatoren) aufweisen. Unter einer Folie wird im Sinne der Erfindung ein dünnes Halbzeug verstanden, das aus einem Metall und/oder einem Kunststoff hergestellt ist. Dabei kann die Folie als Träger (Substrat) für ein Material mit gewünschten elektrischen und/oder chemischen Eigenschaften dienen oder aus dem Material mit den genannten Eigenschaften selbst hergestellt sein. Unter einer Kollektorfolie wird im Sinne der Erfindung eine Folie verstanden, welche auch zur Sammeln und Leiten von elektrischen Ladungen ausgelegt und eingerichtet ist. Eine Kollektorfolie im Sinne der Erfindung kann beispielsweise, aber nicht nur, eine Leiterfolie, insbesondere Metallfolie, oder eine mit einem Leitermaterial, insbesondere Metall, beschichtete Kunststofffolie sein. Unter einem elektrochemisch aktiven Material werden im Sinne der Erfindung Materialien verstanden, die auch an einer elektrochemischen Reaktion in dem aktiven Teil teilnehmen. Eine Anordnung wird im Sinne der Erfindung als flach verstanden, wenn ihre Ausdehnung in einer Raumrichtung kleiner, insbesondere deutlich kleiner, als eine Ausdehnung in den zwei verbleibenden Raumrichtungen ist. Unter einer Einhausung wird im Sinne der Erfindung auch eine gas-, dampf- und flüssigkeitsdichten Hülle verstanden, welche wenigstens den aktiven Teil aufnimmt und allseitig umgibt. Unter Polkontaktbereichen werden im Sinne der Erfindung von außerhalb der Einhausung zugängliche Bereiche verstanden, welche einen Austausch elektrischer Energie mit dem aktiven Teil ermöglichen. Polkontaktbereiche sind sogenannte Ableiter, die mit dem aktiven Teil im Inneren der Einhausung in Verbindung stehen und durch eine Wand, eine Naht oder eine Lücke in der Einhausung nach außerhalb der Einhausung geführt sind, oder durch Teile der Einhausung selbst gebildet sein. Unter einem umgeformten, vorzugsweise tiefgezogenen Bauteil wird im Sinne der Erfindung ein Bauteil verstanden, das durch Zugdruckumformen eines Blechs, also eines plattenförmigen Halbzeugs, hergestellt ist. In einem weiteren Sinne können auch andere dünnwandige Bauelemente, die durch Zugdruckumformen oder Warmpressen hergestellt sind, als umgeformtes bzw. tiefgezogenes Bauteil verstanden werden.

Da nach der Erfindung wenigstens eines der Einhausungsteile ein umgeformtes bzw. tiefgezogenes Bauteil ist, das vorzugsweise aus Blech besteht, und beide Einhausungsteile den aktiven Teil aufnehmen, kann auch auf einen umlaufenden Rahmen verzichtet werden. Hierdurch kann auch die Montage vereinfacht werden.

Nach einer bevorzugten Ausführungsform der Erfindung weist der aktive Teil Elektrodenkontaktbereiche auf, die stirnseitig, insbesondere an unterschiedlichen Stirnseiten oder an einer gleichen Stirnseite, von der Folienanordnung abragen und die vorzugsweise durch Abschnitte der Kollektorfolien gebildet sind. Unter einem Elektrodenkontaktbereich wird im Sinne der Erfindung ein Bereich verstanden, der bei Kontaktieren eine elektrische Verbindung zu einem Elektrodenbereich im inneren des aktiven Teils ermöglicht.

Nach einer weiteren bevorzugten Ausführungsform der Erfindung ist wenigstens ein elastisches Bauteil vorgesehen, welches auf wenigstens einen der Elektrodenkontaktbereiche im Sinne einer elastischen Druckkraft einwirkt und einen Kontakt mit einem zugehörigen Polkontaktbereich durch Kraftschluss herstellt. Unter einem elastischen Bauteil wird im Sinne der Erfindung ein Bauteil verstanden, das auch elastisch verformbar ist und eine elastische Rückstellkraft ausübt. Wenn ein elastisches Bauteil vorgesehen ist, welches auf wenigstens einen der Elektrodenkontaktbereiche im Sinne einer elastischen Druckkraft einwirkt und einen Kontakt mit einem zugehörigen Polkontaktbereich durch Kraftschluss herstellt, kann auch eine elektrische Verbindung zwischen Elektrodenkontaktbereichen und Polkontaktbereichen zuverlässig verwirklicht werden.

Nach einer weiteren bevorzugten Ausführungsform der Erfindung wirkt das wenigstens eine elastische Bauteil im Sinne einer Druckkraft flächennormal auf flächig ausgebildete Elektrodenkontaktbereiche. Wenn flächige Elektrodenkontaktbereiche vorgesehen sind und das elastische Bauteil im Sinne einer Druckkraft flächennormal auf diese wirkt, können die Elektrodenkontaktbereiche wirksam aneinander gepresst werden, und sie können eine einheitliche Struktur ausbilden. Da die Elektrodenkontaktbereiche stirnseitig von dem flachen aktiven Teil abragen, verlaufen sie wenigstens teilweise entlang Teilen der Einhausung und können zuverlässig zwischen dem elastischen Bauteil und den Teilen der Einhausung fixiert werden; dabei liegt es im Rahmen der Erfindung, wenn zwischen den Elektrodenkontaktbereichen und dem elastischen Teil und/oder zwischen den Elektrodenkontaktbereichen und den Einhausungsteilen weitere Bauelemente angeordnet sind. So kann auch eine elektrische Verbindung zwischen Elektrodenkontaktbereichen und Polkontaktbereichen zuverlässig verwirklicht werden.

Nach einer weiteren bevorzugten Ausführungsform der Erfindung wirkt das wenigstens eine elastische Bauteil im Sinne einer Druckkraft in Richtung einer Stirnseite des aktiven Teils auf einen dort abragenden Elektrodenkontaktbereich bzw. dort abragende Elektrodenkkontaktbereiche. Wenn das elastische Bauteil in Richtung einer Stirnseite des aktiven Teils wirkt, kann der aktive Teil auch wirksam gegen die Einhausung abgestützt und fixiert werden. Wenn es gleichzeitig auf dort abragende Elektrodenkkontaktbereiche wirkt, können diese wirksam mit Polkontaktbereichen verbunden werden.

Nach einer weiteren bevorzugten Ausführungsform der Erfindung ist das wenigstens eine elastische Bauteil aus einem elektrisch leitenden Material hergestellt ist und im Stromweg zwischen einem Polkontaktbereich und einem Elektrodenkontaktbereich angeordnet. Somit dient das elastische Bauteil auch gleichzeitig der Kontaktierung zwischen dem Elektrodenkontaktbereich und dem Polkontaktbereich.

Nach einer weiteren bevorzugten Ausführungsform der Erfindung klemmt das wenigstens eine elastische Bauteil einen Elektrodenkontaktbereich zwischen sich und einem Polkontaktbereich ein. Auf diese Weise kann auch eine direkte elektrische Verbindung zwischen dem Elektrodenkontaktbereich und dem Polkontaktbereich hergestellt werden.

Nach einer weiteren bevorzugten Ausführungsform der Erfindung sind die Polkontaktbereiche durch das erste und das zweite Einhausungsteil, die elektrisch voneinander isoliert sind, gebildet, wobei vorzugsweise Erhebungen in den Flachseiten der Einhausungsteile als Kontaktflächen vorgesehen sind. Wenn die Einhausungsteile gleichzeitig Polkontaktbereiche ausbilden, kann auch der Aufbau und die Herstellung der Zelle einfach gehalten werden. Insbesondere können beispielsweise, aber nicht nur, die Flachseiten einer flachen Zelle als großflächige Kontaktbereiche dienen. Wenn Erhebungen in den Flachseiten der Einhausungsteile als Kontaktflächen vorgesehen sind, kann ein definierter Ort für einen Stromübergang festgelegt werden.

Erfindungsgemäß sind die Polkontaktbereiche durch Ableiter gebildet, die sich jeweils durch eine Nahtstelle zwischen dem ersten und dem zweiten Einhausungsteil hindurch erstrecken und die vorzugsweise gegen die Einhausungsteile isoliert sind. Wenn anstelle der Einhausungsteile spezielle Ableiter als Polkontaktbereiche vorgesehen sind, kann die Kontaktierung der Zelle auf definierte Orte beschränkt werden. Ableiter können außerhalb der Einhausung in beliebiger Form ausgebildet sein und so den jeweiligen Anwendungsfällen konstruktiv angepasst werden.

Erfindungsgemäß erstrecken sich die Ableiter außerhalb der Einhausung entlang einer Oberfläche wenigstens eines der Einhausungsteile. In dieser Form können die Ableiter auch besonders raumsparend angeordnet sein. Eine Oberfläche eines Einhausungsteils kann insbesondere, aber nicht nur, eine Flachseite oder eine Schmalseite sein.

Nach einer weiteren bevorzugten Ausführungsform der Erfindung sind das erste und das zweite Einhausungsteil durch eine elastische, vorzugsweise elektrisch nichtleitende Masse stoffschlüssig miteinander verbunden.

Nach einer weiteren bevorzugten Ausführungsform der Erfindung ist die Folienanordnung eine flache Stapelanordnung. Unter einer Stapelanordnung wird im Sinne der Erfindung eine Anordnung verstanden, in welcher Einzelfolien identifizierbar sind, welche übereinander geschichtet sind und die randseitig vorzugsweise nicht zusammenhängen.

Nach einer weiteren bevorzugten Ausführungsform der Erfindung ist die Folienanordnung ein flacher Wickel, der insbesondere auf einem Wickelkern aufgewickelt ist. Unter einem Wickel wird im Sinne der Erfindung eine Anordnung verstanden, in welcher wenigstens eine Einzelfolie oder mehrere übereinander geschichtete Einzelfolien wiederholt umeinander gewickelt ist bzw. sind, sodass die Einzelfolie oder die mehreren Einzelfolien von einer innersten Lage bis zu einer äußersten Lage vorzugsweise durchgehend zusammenhängen. Unter einem Wickelkern wird im Sinne der Erfindung ein Bauelement verstanden, das auch als Hilfe beim Wickeln und/oder zur Stabilisierung des Wickels dienen kann. Der Wickelkern kann nach dem Wickeln verbleiben oder entfernt werden.

Nach einer weiteren bevorzugten Ausführungsform der Erfindung weist der Wickelkern eine Funktion eines Wärmeleitelements und/oder eines Stromleitelements auf. Unter einem Wärmeleitelement wird im Sinne der Erfindung ein Bauelement verstanden, welches auch Wärme aus dem aktiven Teil der Zelle nach außen, gegebenenfalls nach außerhalb der Einhausung leitet und so auch zur Regulierung des Wärmehaushalts der Zelle beträgt. Wenn der Wickelkern eine Funktion eines Stromleitelements aufweist, kann er beispielsweise, aber nicht nur, als Elektrodenkontaktbereich und gegebenenfalls gleichzeitig als Ableiter, also als Polkontaktbereich dienen; im letzteren Fall ist diesbezüglich eine weitere Kontaktierung zwischen Elektrodenkontaktbereich und Polkontaktbereich nicht mehr erforderlich.

Nach einer weiteren bevorzugten Ausführungsform der Erfindung ist an wenigstens eine, vorzugsweise beide Seiten der ersten Kollektorfolie angrenzend ein erstes Elektrodenmaterial, das im Sinne einer ersten Polarität elektrochemisch aktiv ist, angeordnet, wobei das erste Elektrodenmaterial vorzugsweise als Schicht auf der ersten Kollektorfolie aufgebracht ist, ist an wenigstens eine, vorzugsweise beide Seiten der zweiten Kollektorfolie angrenzend ein zweites Elektrodenmaterial, das im Sinne einer zweiten Polarität elektrochemisch aktiv ist, angeordnet, wobei das zweite Elektrodenmaterial vorzugsweise als Schicht oder Schichten auf der zweiten Kollektorfolie aufgebracht ist, und ist zwischen erstem Elektrodenmaterial und zweitem Elektrodenmaterial benachbarter Kollektorfolien ein Separatormaterial angeordnet.

Die vorstehenden und weitere Merkmale, Aufgaben und Vorteile der vorliegenden Erfindung werden aus der nachstehenden Beschreibung deutlicher ersichtlich werden, die unter Bezugnahme auf die beigefügten Zeichnungen angefertigt wurde. In den Zeichnungen zeigt:
- Fig. 1: eine räumliche Darstellung eines äußeren Aufbaus einer Flachkontaktzelle ;
- Fig. 2: eine Draufsicht auf eine Oberseite einer Zelle;
- Fig. 3: eine Seitenansicht auf eine Flanke der Zelle in Blickrichtung eines Pfeils "III" in Fig. 2;
- Fig. 4: eine Längsschnittdarstellung eines beispielhaften Innenaufbaus der Zelle entlang der Mittelebene der Zelle in Blickrichtung eines Pfeils "IV" in Fig. 2;
- Fig. 5: eine Längsschnittdarstellung entsprechend Fig. 3 einer weiteren Zelle;
- Fig. 6: eine Querschnittsansicht der Zelle entlang einer durch eine strichpunktierte Linie in Fig. 5 symbolisierten Ebene Blickrichtung eines Pfeils "VI" in Fig. 5;
- Fig. 7: eine Längsschnittdarstellung einer Seitenansicht auf eine Flanke einer Ausführungsform einer weiteren Zelle;
- Fig. 8: eine Längsschnittdarstellung einer Seitenansicht auf eine Flanke einer bevorzugten Ausführungsform der erfindungsgemäßen Zelle;
- Fig. 9: eine räumliche Darstellung der Zelle von Fig. 8;
- Fig. 10: eine Längsschnittdarstellung einer Seitenansicht auf eine Flanke einer weiteren bevorzugten Ausführungsform der erfindungsgemäßen Zelle;
- Fig. 11: eine Längsschnittdarstellung entsprechend Fig. 3 einer weiteren Zelle;
- Fig. 12: eine Querschnittsansicht der Zelle von Fig. 11 entlang einer durch eine strichpunktierte Linie in Fig. 11 symbolisierten Ebene in Blickrichtung eines Pfeils "XII" in Fig. 11;
- Fig. 13: eine Längsschnittdarstellung entsprechend Fig. 3 einer weiteren Zelle;
- Fig. 14: eine Längsschnittdarstellung einer Seitenansicht auf eine Flanke einer weiteren bevorzugten Ausführungsform der erfindungsgemäßen Zelle;
- Fig. 15: eine Längsschnittdarstellung entsprechend Fig. 3 einer weiteren Zelle;
- Fig. 16: eine räumliche Darstellung eines beispielhaften Aufbaus eines Folienpakets in einer Zelle dieser Erfindung in einem unfertigen Zustand (während der Herstellung);
- Fig. 17: eine räumliche Darstellung eines anderen beispielhaften Aufbaus eines Folienpakets in einer Zelle dieser Erfindung in einem unfertigen Zustand (während der Herstellung);
- Fig. 18: eine räumliche Darstellung einer Abwandlung des Aufbaus des Folienpakets von Fig. 17;
- Fig. 19: eine Draufsicht einer Abwandlung des Aufbaus des Folienpakets;
- Fig. 20: eine Draufsicht einer weiteren Abwandlung des Aufbaus des Folienpakets;
- Fig. 21: eine Draufsicht einer Abwandlung des Folienpakets von Fig. 17;
- Fig. 22: eine Draufsicht eines Wickeldorns zur Verwendung in dem Folienpaket von Fig. 17;
- Fig. 23: eine Längsschnittdarstellung einer Abwandlung von Fig. 13;
- Fig. 24: eine vergrößerte Horizontalschnittansicht eines stirnseitigen Bereichs der Zelle von Fig. 23 entlang einer durch eine strichpunktierte Linie in Fig. 23 symbolisierten Ebene in Blickrichtung eines Pfeils "XXIV";
- Fig. 25: eine schematische Längsschnittdarstellung entsprechend Fig. 3 einer Zelle;
- Fig. 26: eine Längsschnittansicht entsprechend Fig. 3 einer weiteren Zelle;
- Fig. 27: eine Längsschnittansicht entsprechend Fig. 3 einer weiteren der Zelle; und
- Fig. 28: eine Querschnittsansicht der Zelle der Abwandlung von Fig. 27 in entlang einer durch eine strichpunktierte Linie in Fig. 27 symbolisierten Ebene in Blickrichtung eines Pfeils "XXVIII".

Es ist darauf hinzuweisen, dass die Darstellungen in den Figuren schematisch sind und sich auf die Wiedergabe der für das Verständnis der Erfindung wichtigsten Merkmale beschränken. Auch ist darauf hinzuweisen, dass die in den Figuren wiedergegebenen Abmessungen und Größenverhältnisse allein der Deutlichkeit der Darstellung geschuldet sind und in keiner Weise einschränkend zu verstehen sind, es sei denn, aus der Beschreibung ergäbe sich etwas anderes. Insbesondere Materialstärken sind in den Figuren oft stark überhöht dargestellt.

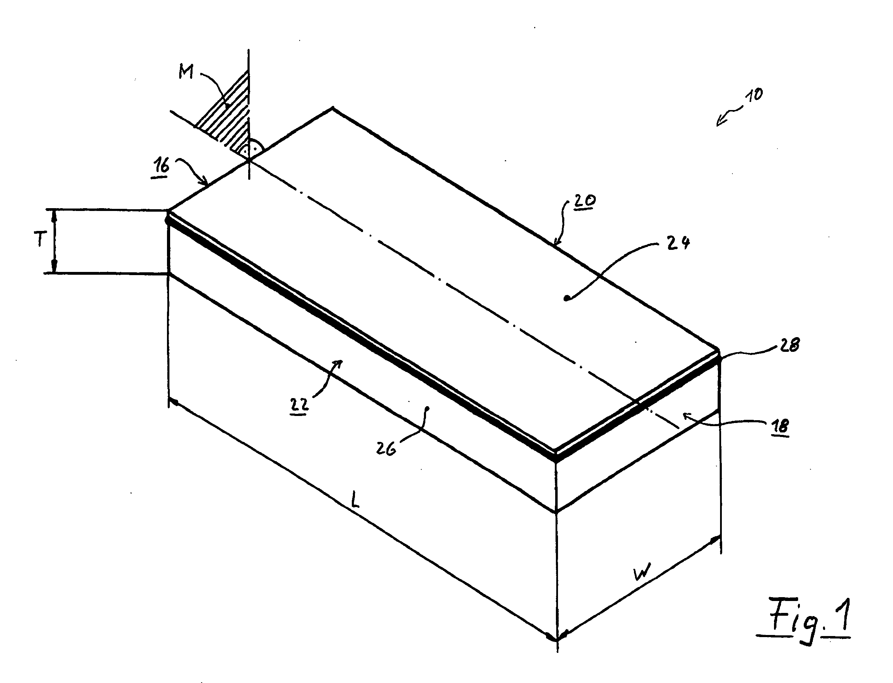

Fig. 1 zeigt schematisch einen äußeren Aufbau einer Flachkontaktzelle 10 in einer räumlichen Darstellung. Die Flachkontaktzelle 10 wird im Rahmen dieser Beschreibung auch als Zelle 10 bezeichnet.

Die Flachkontaktzelle 10 weist eine flache, in etwa quaderförmige Gestalt auf. Zur konkreten Bezugnahme sind an der Zelle 10 eine Oberseite 12, eine Unterseite 14, zwei Stirnseiten 16, 18 und zwei Flanken 20, 22 definiert. Die Oberseite 12 und die Unterseite 14 sind wenigstens im Wesentlichen parallel zueinander angeordnet. Ebenso sind jeweils die Stirnseiten 16, 18 und sind die Flanken 20, 22 wenigstens im Wesentlichen parallel zueinander angeordnet. Die Oberseite 12 und die Unterseite 14 sind die Seiten mit der größten Flächenausdehnung im Verhältnis zu anderen Seiten, und sie werden auch als Flachseiten 12, 14 bezeichnet. Die Abmessungen der Flachseiten 12, 14 definieren eine Länge L und eine Breite W der Zelle 10, wobei die Länge L - ohne Beschränkung der Allgemeinheit - größer als die Breite W ist. Der Abstand der Oberseite 12 von der Unterseite 14 definiert eine Dicke T der Zelle 10. Die Stirnseiten 16, 18 und die Flanken 20, 22 verbinden die Oberseite 12 und die Unterseite 14 randseitig umlaufend miteinander, wobei - wiederum ohne Beschränkung der Allgemeinheit, die Stirnseiten 16, 18 die kürzeren Kanten der Flachseiten 12, 14 mit der Abmessung W (Breite) miteinander verbinden und die Flanken 20, 22 die längeren Kanten der Flachseiten 12, 14 mit der Abmessung L (Länge) miteinander verbinden. Die Stirnseiten 16, 18 und die Flanken 20, 22 werden auch als Schmalseiten 16, 18, 20, 22 der Zelle 10 bezeichnet. Eine zu den Flanken 20, 22 parallele Ebene, welche die Flachseiten 12, 14 in der Hälfte der Breite W schneidet, definiert eine Mittelebene M der Zelle 10.

Die Zelle 10 weist einen elektrochemisch aktiven Teil auf, der in Fig. 1 nicht näher dargestellt ist. Ohne Beschränkung der Allgemeinheit ist der aktive Teil der Zelle 10 eine paketartige, gestapelte oder gewickelte Anordnung von vorzugsweise beschichteten Folien mit bestimmten elektrochemischen Eigenschaften. Dabei bilden die Folien und/oder Schichten abwechselnd Anodenbereiche, Separatorbereiche und Kathodenbereiche aus, die der Aufnahme, Umwandlung, Speicherung und Abgabe elektrischer Ladungsenergie im Sinne einer galvanischen Zelle dienen, sowie Stromsammelbereiche, die jeweils mit Anoden- bzw. Kathodenbereichen verbunden sind und der Ableitung oder Zuleitung elektrischer Ladung von oder zu den Anoden- bzw. Kathodenbereichen dienen. Der Aufbau solcher Folienanordnungen wird später anhand spezieller Zellen genauer beschrieben werden. Die Stromsammelbereiche, auch als Kollektoren bezeichnet, sind aus dem eigentlichen Folienpaket herausgeführt und, nach ihrer Zuordnung getrennt, zusammengefasst. Die aus dem eigentlichen Folienpakets herausragenden Abschnitte der Kollektoren werden auch als Ableiterfahne bezeichnet.

Ein Gehäuse bzw. eine Einhausung des Folienpakets bzw. des aktiven Teils der Zelle 10 wird durch eine Oberschale 24 und eine Unterschale 26 gebildet, die auch als Halbschalen 24, 26 bezeichnet werden. In dem dargestellten Ausführungsbeispiel ist die Unterschale 26 deutlich höher als die Oberschale 24. So kann die Unterschale 26 als Wanne und kann die Oberschale 24 als Deckel bezeichnet werden. Diese Formgebung ist ganz beispielhaft und kann im Hinblick auf die mechanischen, elektrischen, fertigungstechnischen und wirtschaftlichen Erfordernisse abgewandelt werden. An einer Berührungsfläche zwischen der Oberschale 24 und der Unterschale 26 ist eine Dichtung 28 angeordnet. Die Halbschalen 24, 26 sind aus einem gut leitenden, insbesondere metallischen Werkstoff wie etwa Kupfer oder Aluminium oder einer Legierung hieraus hergestellt. Die Form der Halbschalen 24, 26 ist durch Tiefziehen hergestellt.

Die Ableiterfahnen des aktiven Teils der Zelle 10 sind jeweils mit einer der Halbschalen 24, 26 verbunden. Somit bilden die Halbschalen 24, 26, insbesondere mit den durch sie definierten Flachseiten 12, 14, flache Kontaktbereiche bzw. Pole der Zelle. Die Dichtung 28 weist eine elektrisch isolierende Eigenschaft auf und dient auch der zuverlässigen elektrischen Trennung der Pole (Halbschalen 24, 26).

Eine Batterie kann durch Aneinanderlegen mehrerer Zellen 10 hergestellt werden, wobei die Flachseiten 12, 14 einander berühren und eine Verschaltung zwischen den Zellen 10 (insbesondere eine Reihenschaltung) verwirklichen.

In einer optionalen Abwandlung können Bereiche der Halbschalen 24, 26, die nicht der Kontaktierung dienen sollen, beispielsweise die Schmalseiten 16, 18, 20, 22, mit einem isolierenden Material beschichtet sein.

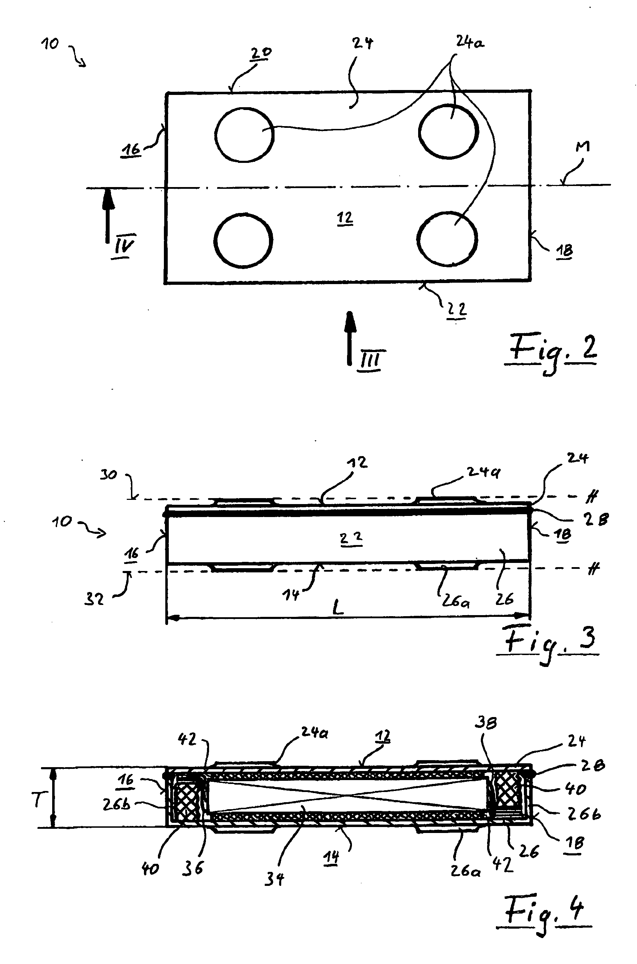

Fig. 2 und Fig. 3 zeigen eine Variante der Flachkontaktzelle 10 aus Fig. 1. Dabei ist Fig. 2 eine Draufsicht auf die Oberseite 12 der Zelle 10, und Fig. 3 zeigt eine Seitenansicht auf die Flanke 16 (Blickrichtung eines Pfeils "III" in Fig. 2).

Gemäß der Darstellung in Fig. 2 und Fig. 3 sind an der Flachseite 12 der Oberschale 24 vier Erhebungen 24a ausgebildet und sind an der Flachseite 14 der Unterschale 26 vier Erhebungen 26a ausgebildet. Die Erhebungen 24a, 26a bilden kreisförmige Kontaktabschnitte und definieren gemeinsam jeweils eine Kontaktebene 30 auf der Oberseite 12 bzw. eine Kontaktebene 32 auf der Unterseite 14 der Zelle 10. Die Erhebungen 24a, 26a bilden somit wohldefinierte Kontaktflächen, welche von einer eventuellen Verformung bzw. Verwölbung der Flachseiten 12, 14 im Betrieb der Zelle 10 weitgehend unabhängig sind.

Fig. 4 zeigt einen beispielhaften Innenaufbau der Zelle 10 in einer Längsschnittdarstellung entlang der Mittelebene M der Zelle 10 (Blickrichtung eines Pfeils "IV" in Fig. 2).

Gemäß der Darstellung in Fig. 4 bilden die Halbschalen 24, 26 eine Einhausung für ein Folienpaket (den elektrochemisch aktiven Teil) 34 der Zelle 10. Obschon von der Schnittebene (Mittelebene M, Fig. 1 oder Fig. 2) ebenfalls geschnitten, sind Einzelheiten des Inneren des Folienpakets 34 in Fig. 4 nicht näher dargestellt; vielmehr ist die Schnittebene durch das Folienpaket 34 nur durch ein Diagonalkreuz symbolisiert. In der Schnittdarstellung von Fig. 4 wird deutlich, dass die Unterschale 26 eine Wannenform mit einem tiefgezogenen Rand 26b aufweist, während die Oberschale 24 wenigstens im Wesentlichen plattenförmig ausgebildet ist. Die Halbschalen 24, 26 sind durch die Dichtung 28 elektrisch voneinander isoliert und mechanisch miteinander verbunden. Die Dichtung 28 kann beispielsweise eine Heißklebemasse oder dergleichen sein.

Im Bereich der einen Stirnseite 16 ragen Ableiterfahnen 36 aus dem Folienpaket 34, und im Bereich der gegenüberliegenden Stirnseite 18 ragen Ableiterfahnen 38 aus dem Folienpaket 34. Eine Stütze 40, der im Bereich der einen Stirnseite 16 angeordnet ist und sich in Dickenrichtung T der Zelle 10 gegen die Unterschale 26 abstützt, drängt die Ableiterfahnen 36 auf dieser Seite gegen die Oberschale 24 und klemmt sie dort ein. Eine weitere Stütze 40, der im Bereich der anderen Stirnseite 18 angeordnet ist und sich in Dickenrichtung T der Zelle 10 gegen die Oberschale 24 abstützt, drängt die Ableiterfahnen 38 auf dieser Seite gegen die Unterschale 26 und klemmt sie dort ein. (Soweit in der Figur Zwischenräume zwischen den Ableiterfahnen 36 bzw. 38 dargestellt sind, dient dies nur der Verdeutlichung einer Mehrzahl von Ableiterfahnen; tatsächlich liegen die Ableiterfahnen im Einbauzustand ohne Zwischenräume dicht aufeinander.) Die Stützen 40 sind aus einem elektrisch isolierenden, mechanisch elastischen Material hergestellt und sorgen für eine Isolierung der Ableiterfahnen 36 von der Unterschale 26 bzw. der Ableiterfahnen 38 von der Oberschale 24. Die Stützen 40 können auch aus einem vergleichsweise drucksteifen Material hergestellt sein, sofern sie genau im Hinblick auf einen freien Raum zwischen Halbschalen 24, 26, abzüglich der Dicke der Ableiterfahnen 36 bzw. 38, dimensioniert sind.

In einer nicht näher dargestellten, Abwandlung kann eine Laserschweißnaht von der Ober- bzw. Unterseite 12, 14 aus ausgebildet sein, um die Ableiterfahnen 36, 38 miteinander und mit der jeweiligen Halbschale 24, 26 zu verbinden. In einer weiteren Abwandlung können auf den Ableiterfahnen 36, 38 jeweils Lotschichten (nicht näher dargestellt) aufgetragen sein, die durch Wärme von außen kurzzeitig aufschmelzen und wieder erstarren und so eine Verbindung der Ableiterfahnen 36, 38 untereinander sowie mit der jeweiligen Halbschale 24, 26 herstellen. In einer weiteren Abwandlung können auf den Ableiterfahnen 36, 38 jeweils Reaktivschichten (nicht näher dargestellt) aufgetragen sein, die durch einen Zündimpuls von außen, etwa in Form von Wärme, elektrischem Strom oder anderem, aktiviert werden, exotherm reagieren und so eine Verbindung der Ableiterfahnen 36, 38 untereinander sowie mit der jeweiligen Halbschale 24, 26 herstellen.

Zwischen dem Flachseiten des Folienpakets 34 und den Halbschalen 24, 26 sind jeweils Dämpfungen 42 angeordnet. Die Dämpfungen 42 sind aus einem elastischen Material wie etwa Gummi, Schaumgummi, Moosgummi oder dergleichen hergestellt und federn mechanische Belastungen (aufgrund Druck, Biegung etc.) in Dickenrichtung T auf das Folienpaket 34 ab. Mittels Reibungswirkung wird das Folienpaket 34 auch in Längsrichtung L und Breitenrichtung (W) durch die Dämpfungen 42 elastisch gehalten. Zusätzlich können weitere Dämpfungen (nicht näher dargestellt) zwischen den Flanken des Folienpakets und der Unterschale 26 angeordnet sein und können die Stützen 40 durch geeignete Formgebung auch eine Abstützung in Längsrichtung L der Zelle 10 bewirken.

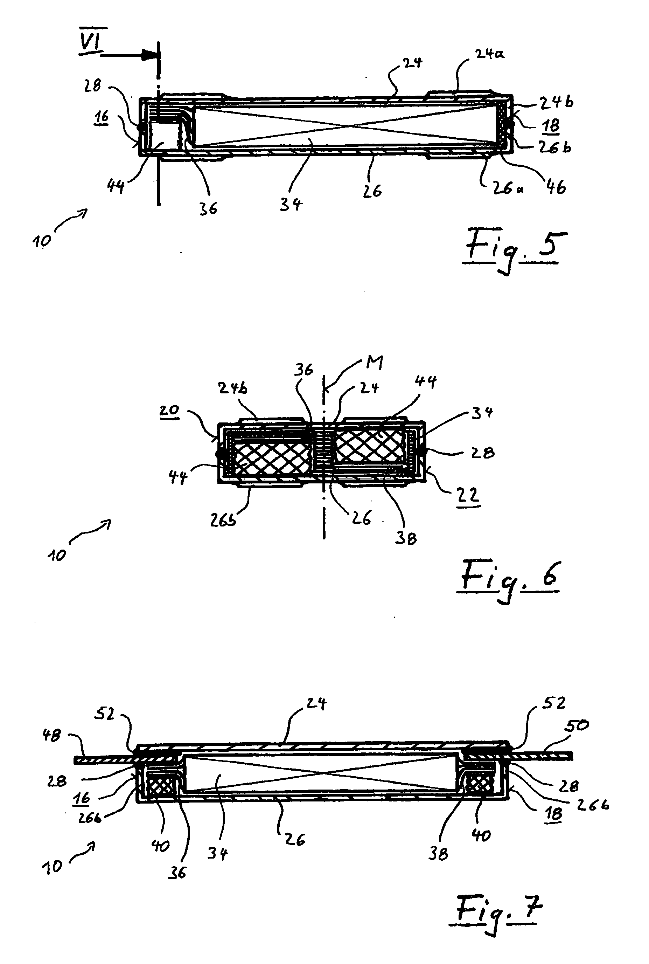

Fig. 5 zeigt in einer Längsschnittdarstellung entsprechend Fig. 3 eine weitere Zelle 10, und Fig. 6 zeigt einen Querschnitt entlang einer durch eine strichpunktierte Linie in Fig. 5 symbolisierten Ebene (Blickrichtung eines Pfeils "VI" in Fig. 5).

Gemäß der Darstellung in Fig. 5 und Fig. 6 sind beide Halbschalen 24, 26 von wannenförmiger Gestalt und weisen jeweils einen Rand 24b, 26b auf, die zusammen mit der Dichtung 28 die Schmalseiten 16, 18, 20, 22 der Zelle 10 bilden. Die Erhebungen 24a, 24b sind wie bei der zuvor beschriebenen Zellen ausgebildet.

Bei dieser Zelle ragen die Ableiterfahnen 36, 38 nur an einer Stirnseite des Folienpakets 34 heraus, hier - ohne Beschränkung der Allgemeinheit - auf der Seite der Stirnseite 16 der Zelle 10. Die Ableiterfahnen 36, 38 erstrecken sich in Breitenrichtung B der Zelle 10 nicht über die Mittelebene M hinaus, weisen also eine geringfügig oder deutlich geringere Ausdehnung in Breitenrichtung B als die halbe Breite des Folienpakets 34 auf. Dabei ragen - erneut ohne Beschränkung der Allgemeinheit - die Ableiterfahnen 36 auf der Seite der einen Flanke 20 der Zelle 10 heraus, während die Ableiterfahnen 38 auf der Seite der anderen Flanke 22 herausragen.

Eine Stütze 44, der im Bereich der einen Flanke 20 angeordnet ist und sich in Dickenrichtung T der Zelle 10 gegen die Unterschale 26 abstützt, drängt die Ableiterfahnen 36 auf dieser Seite gegen die Oberschale 24 und klemmt sie dort ein. Eine weitere Stütze 44, der im Bereich der anderen Flanke 22 angeordnet ist und sich in Dickenrichtung T der Zelle 10 gegen die Oberschale 24 abstützt, drängt die Ableiterfahnen 38 auf dieser Seite gegen die Unterschale 26 und klemmt sie dort ein. Für Materialauswahl und sonstige Eigenschaften der Stützen 44 gilt das für die Stützen 40 der vorherigen Zelle Gesagte entsprechend. Eine Dämpfung 46 stützt das Folienpaket 34 auf der anderen Stirnseite 18 elastisch gegen die Ränder 24b, 26b der Halbschalen 24, 26 ab. Weitere Dämpfungen, welche den Abstand zwischen dem Folienpaket 34 und den Halbschalen 24, 26 an den Flachseiten 14, 16 und ggf. an den Flanken 20, 22 überbrücken, sind in der Zeichnung nicht näher dargestellt.

Fig. 7 zeigt in einer Längsschnittdarstellung eine Seitenansicht auf eine Flanke einer Ausführungsform der Zelle 10.

Die Zelle 10 in dieser Ausführungsform weist zwei Polbleche 48, 50 auf, die sich im Bereich der Stirnseiten 16, 18 zwischen der Oberschale 24 und der Unterschale 26 aus dem Inneren der Zelle 10 nach außen erstrecken. Die Polbleche 48, 50 schmiegen sich an die Innenseite der Oberschale 24. Sie sind durch die Dichtung 28 gegen die Unterschale 26 und eine weitere Dichtung 52 gegen die Oberschale 24 elektrisch isoliert und stoffschlüssig mit diesen verbunden.

Eine Stütze 40, die im Bereich der einen Stirnseite 16 angeordnet ist und sich in Dickenrichtung T der Zelle 10 gegen die Unterschale 26 abstützt, drängt die Ableiterfahnen 36 auf dieser Seite gegen das dort angeordnete Polblech 48 in Richtung der Oberschale 24 und klemmt sie dort ein. Eine weitere Stütze 40, die im Bereich der anderen Stirnseite 18 angeordnet ist und sich in Dickenrichtung T der Zelle 10 ebenfalls gegen die Unterschale 26 abstützt, drängt die Ableiterfahnen 38 auf dieser Seite gegen das dort angeordnete Polblech 50 in Richtung der Oberschale 24 und klemmt sie dort ein. Für Materialauswahl und sonstige Eigenschaften der Stützen 44 gilt das für die Stützen 40 der Zelle gemäß Fig. 1 Gesagte entsprechend.

Dämpfungen, welche den Abstand zwischen dem Folienpaket 34 und den Halbschalen 24, 26 an den Flachseiten 14, 16 und ggf. an den Flanken 20, 22 überbrücken, sind in der Zeichnung nicht näher dargestellt.

Die Halbschalen 24, 26 dieser bevorzugten Ausführungsform sind aus einem elektrisch isolierenden Material hergestellt, um unbeabsichtigte Leitungsverbindungen mit den Polblechen 48, 50 zu vermeiden. Alternativ können sie zu Zwecken der Abschirmung auch aus einem Leitermaterial, etwa einem Metall wie beispielsweise Kupfer oder Aluminium oder einer Legierung hergestellt sein, wobei optional eine isolierende Beschichtung vorgesehen sein kann.

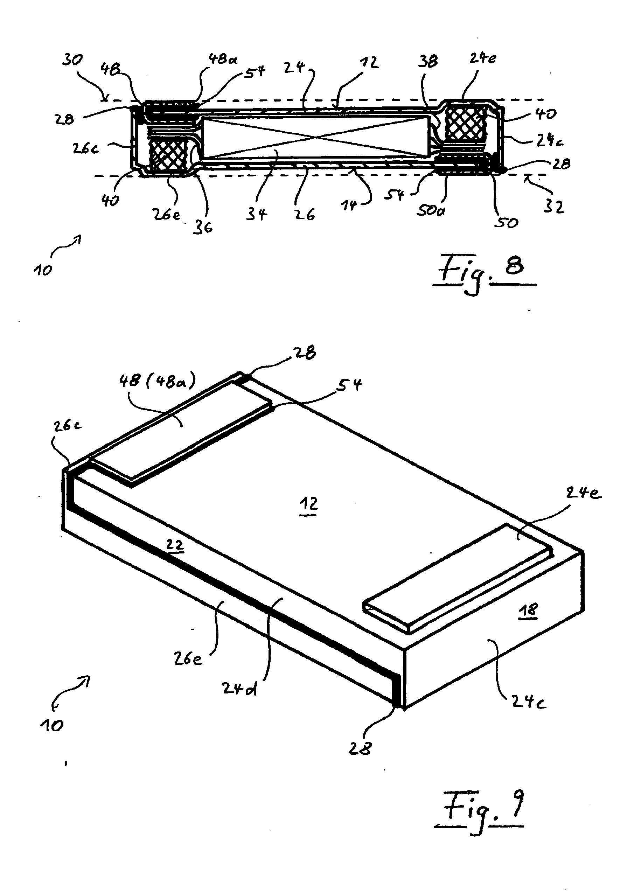

Fig. 8 zeigt in einer Längsschnittdarstellung eine Seitenansicht auf eine Flanke einer weiteren bevorzugten Ausführungsform der erfindungsgemäßen Zelle 10 mit Polblechen 48, 50, und Fig. 9 zeigt eine räumliche Darstellung der Zelle 10 dieser bevorzugten Ausführungsform.

Gemäß der Darstellung in Fig. 9 weisen die Halbschalen 24, 26 eine ladenförmige Gestalt auf, bei welcher sich jeweils ein stirnseitiger Rand 24c bzw. 26c über die gesamte Dicke T der Zelle 10 erstreckt und eine Stirnseite 16 bzw. 18 der Zelle 10 bildet, auf der gegenüberliegende Stirnseite kein Rand vorgesehen ist und seitliche Ränder 24d, 26d, welche zusammen genommen die Flanken 20, 22 der Zelle 10 bilden, sich jeweils über die Hälfte der Dicke T der Zelle 10 (abzüglich der Dicke der Dichtung 28) erstrecken. Die seitlichen Ränder 24d, 26d sind stumpf aneinander und an den stirnseitigen Rändern 24c, 26c mit der Dichtung 28 dazwischen angeordnet, und so sind die Halbschalen 24, 26 stoffschlüssig miteinander verbunden.

Auch die Zelle 10 dieser bevorzugten Ausführungsform weist zwei Polbleche 48, 50 auf, die sich zwischen der Oberschale 24 und der Unterschale 26 aus dem Inneren der Zelle 10 nach außen erstrecken. Die Polbleche 48, 50 weisen die Form eines U-Profils auf. Das Polblech 48 umfasst das freie, zu dem stirnseitigen Rand 26c der Unterschale 26 weisende Ende der Oberschale 24, wobei eine Dichtung 54 dazwischen angeordnet ist. Gleichermaßen umfasst das Polblech 50 das freie, zu dem stirnseitigen Rand 24c der Oberschale 24 weisende Ende der Unterschale 26, wobei eine weitere Dichtung 54 dazwischen angeordnet ist. Über die Dichtung 28 sind die Polbleche 48, 50 gegen die stirnseitigen Ränder 24c, 26c abgedichtet, von diesen elektrisch isoliert und mit diesen stoffschlüssig verbunden.

Eine Stütze 40, der im Bereich der einen Stirnseite 16 angeordnet ist und sich in Dickenrichtung T der Zelle 10 gegen die Unterschale 26 abstützt, drängt die Ableiterfahnen 36 auf dieser Seite gegen das dort angeordnete Polblech 48 in Richtung der Oberschale 24 und klemmt sie dort ein. Eine weitere Stütze 40, der im Bereich der anderen Stirnseite 18 angeordnet ist und sich in Dickenrichtung T der Zelle 10 gegen die Oberschale 26 abstützt, drängt die Ableiterfahnen 38 auf dieser Seite gegen das dort angeordnete Polblech 50 in Richtung der Unterschale 26 und klemmt sie dort ein. Für Materialauswahl und sonstige Eigenschaften der Stützen 40 gilt das im Zusammenhang mit der Zelle gemäß Figur 1 Gesagte entsprechend.

Dämpfungen, welche den Abstand zwischen dem Folienpaket 34 und den Halbschalen 24, 26 an den Flachseiten 14, 16 und ggf. an den Flanken 20, 22 überbrücken, sind in der Zeichnung nicht näher dargestellt.

Die Polbleche 48, 50 dieser bevorzugten Ausführungsform bilden Kontaktbereiche 48a, 50a, die auf den gegenüberliegenden Flachseiten 12, 14 der Zelle 10 flach aufliegen. Erhebungen 24e, 26e, die sich im Bereich der den Kontaktbereichen 48a, 50a gegenüberliegenden Stirnseiten 16, 18 der Zelle 10 von den Flachseiten 12, 14 erheben, gleichen einen Dickenauftrag der Kontaktbereiche 48a, 50a auf den Flachseiten 12, 14 der Zelle 10 aus. So kann eine Verschaltung mehrerer Zellen 10 durch flächiges Stapeln unter Aneinanderlegen der Kontaktbereiche 48a, 50a benachbarter Zellen 10 ohne Winkelversatz ermöglicht werden. Auf der Innenseite der Halbschalen 24, 26 entsprechen die Erhebungen 24e, 26e jeweils einer Einsenkung, welche auch eine formschlüssige Aufnahme der Stützem 40 ermöglicht.

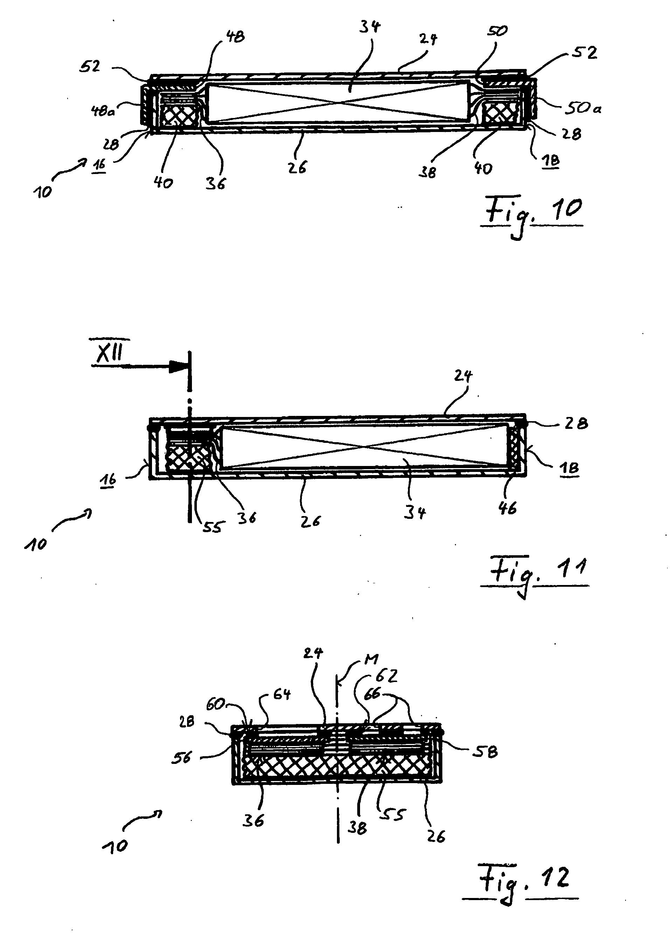

Fig. 10 zeigt in einer Längsschnittdarstellung eine Seitenansicht auf eine Flanke einer weiteren bevorzugten Ausführungsform der Zelle 10 mit Polblechen 48, 50.

Gemäß der Darstellung in Fig. 10 weist die Zelle 10 eine Oberschale 24 von wenigstens im Wesentlichen plattenförmiger Gestalt und eine Unterschale 26 von wenigstens im Wesentlichen wannenförmiger Gestalt auf. Insoweit ähnelt die Gehäuseform der Zelle 10 dieser bevorzugten Ausführungsform derjenigen in Fig. 7. Im Unterschied zu der bevorzugten Ausführungsform in Fig. 7 sind die Polbleche 48, 50 außerhalb des Gehäuses abgewinkelt und schmiegen sich mit dem abgewinkelten Teil an die Stirnseiten 16, 18 der Zelle 10 an. Die Dichtung 28 verbreitert sich in diesem Bereich und erstreckt sich zwischen den Stirnseiten 16, 18 und den abgewinkelten Teilen der Polbleche 48, 50.

Die abgewinkelten Teile der Polbleche 48, 50 bilden Kontaktbereiche (Pole) der Zelle 10, die stirnseitig von außen zugänglich sind. Mit dieser Konfiguration ist es auch möglich, mehrere Zellen 10 in Längsrichtung L anzuordnen und direkt untereinander zu kontaktieren. Eine Kontaktierung von übereinander angeordneten Zellen 10 ist über externe Verbindungselemente möglich.

Fig. 11 zeigt in einer Längsschnittdarstellung entsprechend Fig. 3 eine weitere Zelle 10, und Fig. 12 ist eine Querschnittsansicht entlang einer durch eine strichpunktierte Linie in Fig. 11 symbolisierten Ebene (Blickrichtung eines Pfeils "XII" in Fig. 11).

Gemäß der Darstellung in Fig. 11 weist die Zelle 10 eine Oberschale 24 von wenigstens im Wesentlichen plattenförmiger Gestalt und eine Unterschale 26 von wenigstens im Wesentlichen wannenförmiger Gestalt auf.

Wie bei der Zelle in Fig. 3 ragen die Ableiterfahnen 36, 38 nur an einer Stirnseite (Stirnseite 16) des Folienpakets 34 heraus, und erstrecken sich die Ableiterfahnen 36, 38 in Breitenrichtung B der Zelle 10 nicht über die Mittelebene M hinaus. Eine Stütze 55, der im Bereich der Stirnseite 16 über die Breite der Zelle 10 durchgehend angeordnet ist und sich in Dickenrichtung T der Zelle 10 gegen die Unterschale 26 abstützt, drängt die Ableiterfahnen 36, 38 in Richtung der Oberschale 24.

Kontaktplatten 56, 58 schmiegen sich gegenüber den Stützen 55 an die Unterseite der Oberschale 24, wobei dazwischen Dichtungen 60, 62 vorgesehen sind. Die Kontaktplatten erstrecken sich nicht aus der durch die Halbschalen 24, 28 gebildeten Einhausung heraus. Im Bereich der Kontaktplatten 56, 58 sind Ausnehmungen 64, 66 in der Oberschale 24 vorgesehen, die sich auch durch die Dichtungen 60, 62 hindurch erstrecken. Durch die Ausnehmungen 64, 66 hindurch sind die Kontaktplatten 56, 58 von außen zugänglich.

Die Stützen 55 drücken die Ableiterfahnen 36, 38 gegen die Kontaktplatten 56, 58 und klemmen diese dort ein. Die Kontaktplatten 56, 58 bilden so die Pole der Zelle 10. Durch eine unterschiedliche geometrische Gestaltung und/oder Anordnung der Ausnehmungen 64, 66 wird die Pollage der Kontaktplatten 56, 58 kodiert.

Für Materialauswahl und sonstige Eigenschaften der Stützen 55 gilt das bereits Gesagte entsprechend. Eine Dämpfung 46 stützt das Folienpaket 34 auf der anderen Stirnseite 18 elastisch gegen die Ränder 24b, 26b der Halbschalen 24, 26 ab. Weitere Dämpfungen, welche den Abstand zwischen dem Folienpaket 34 und den Halbschalen 24, 26 an den Flachseiten 14, 16 und ggf. an den Flanken 20, 22 überbrücken, sind in der Zeichnung nicht näher dargestellt.

In optionalen Abwandlungen können die Dichtungen 60, 62 Abschnitte einer einzigen durchgehenden Dichtung sein oder können mit der Dichtung 28 vereinigt bzw. Teil derselben sein.

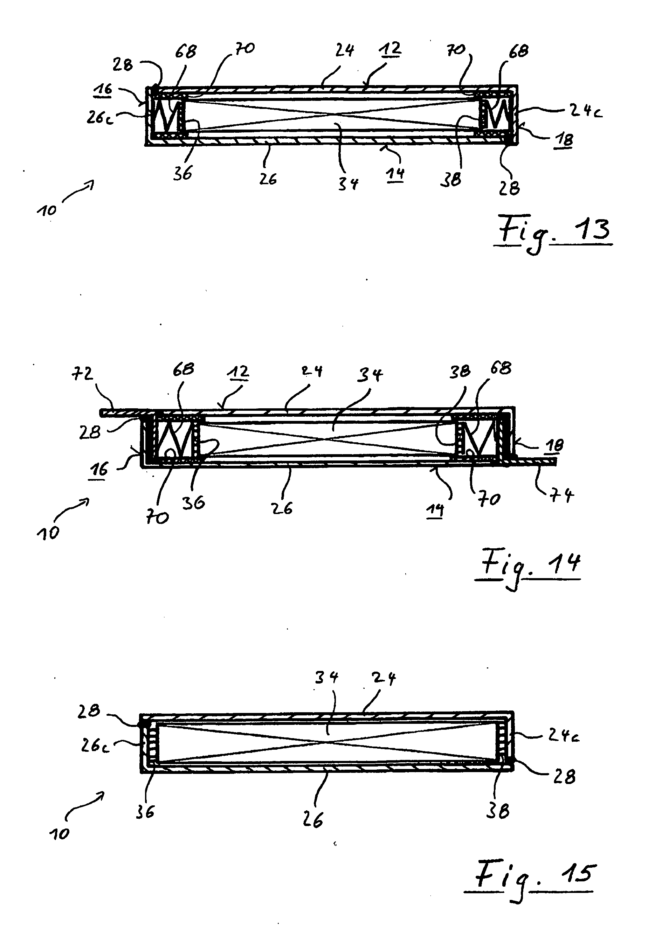

Fig. 13 zeigt in einer Längsschnittdarstellung entsprechend Fig. 3 eine weitere Zelle 10.

Bei der Zelle 10 bilden die Halbschalen 24, 26 wie bei der in Fig. 9 und Fig. 10 gezeigten Variante jeweils eine der Stirnseiten 16, 18 der Zelle 10. Die Flanken 20, 22 der Zelle 10 sind, wie in Fig. 10 gezeigt, jeweils zur Hälfte von seitlichen Rändern 24d, 26d gebildet. (Alternativ kann eine der Halbschalen 24, 26 einen sich über die gesamte Höhe der Zelle 10 erstreckenden seitlichen Rand aufweisen, während die andere der Halbschalten 24, 26 die Grundform eines L-förmig gebogenen Blechs aufweist.)

Bei dieser Zelle ragen Ableiterfahnen 36, 38 des Folienpakets 34 nur vergleichsweise kurz an den Stirnseiten des Folienpakets 34 hinaus. Auf Spannung stehende Kontaktfedern (Druckfedern) 68, die aus einem elastisch federnden und elektrisch leitenden Material hergestellt sind, sitzen auf den stirnseitig abragenden Ableiterfahnen 36, 38 auf und stellen eine elektrische Verbindung zu den stirnseitigen Rändern 24c, 26c der Halbschalen 24, 26 her. Die Kontaktfedern 68 laufen jeweils in Kulissen 70, welche aus einem elektrisch isolierenden Material hergestellt sind und die Kontaktfedern 68 gegen sonstige Bereich der Halbschalen 24, 26 isolieren. Die Kontaktfedern 68 stützen auch das Folienpaket 34 in Längsrichtung ab und bewahren diesen vor Bewegungen im Gehäuse.

Die Halbschalen 24, 26 sind aus einem metallischen, gut leitenden Werkstoff hergestellt und bilden die Pole der Zelle 10. Optionale Erhebungen auf den Flachseiten 12, 14 sind in der Figur nicht dargestellt, ebenso wie optionale Dämpfungen zwischen dem Folienpaket 34 und den Flachseiten bzw. Flanken der Zelle 10.

Fig. 14 zeigt in einer Längsschnittdarstellung eine Seitenansicht auf eine Flanke einer weiteren bevorzugten Ausführungsform der erfindungsgemäßen Zelle 10.

Diese bevorzugten Ausführungsform unterscheidet sich von der zuvor beschriebenen darin, dass Ableiter 72, 74 vorgesehen sind, welche jeweils mittels einer Dichtung 76 gegen die Halbschalen 24, 26 isoliert sind und sich durch Nahtstellen zwischen den Halbschalen 24, 26 hindurch aus dem Inneren der Zelle 10 nach außen erstrecken. Die Ableiter 72, 74 sind aus einem elektrisch gut leitenden Material wie etwa Kupfer, Aluminium oder einer Legierung davon hergestellt und liegen innen an den stirnseitigen Rändern 24c, 26c der Halbschalen 24, 26 an. Die Kontaktfedern 68 sind zwischen den Ableitern 72, 74 und den jeweiligen stirnseitigen Enden des Folienpakets 34 angeordnet und stellen eine elektrische Verbindung zwischen den dort herausragenden Ableiterfahnen 36, 38 und dem jeweiligen Ableiter 72, 74 her. Die außerhalb der Einhausung (Halbschalen 24, 26) liegenden Teile der Ableiter 72, 74 bilden Pole der Zelle 10.

Die Ableiter 72, 74 weisen einen L-förmigen Querschnitt auf. Ein außerhalb der Halbschalen 24, 26 gelegener Schenkel der Ableiter 72, 74 erstreckt sich jeweils wenigstens im Wesentlichen fluchtend mit der jeweiligen Flachseite 12, 14 der Zelle 10. Durch Anordnen mehrerer Zellen 10 mit jeweils unterschiedlichen Ableitern (Polen) 72, 74 aneinander kann eine Reihenschaltung zu einem Batterieblock verwirklicht werden.

Durch geeignete Formgebung und Anordnung der außen liegenden Schenkel der Ableiter 72, 74 kann die Handhabung und Sicherheit bei der Verschaltung beeinflusst werden. Weichen die außen liegenden Schenkel der Ableiter 72, 74 hinter die Ebene der jeweiligen Flachseite 12, 14 zurück, berühren sie sich bei Aneinanderlegen mehrerer Zellen 10 nicht; eine elektrische Verbindung wird durch zusätzliche Verbindungselemente wie etwa Klammer, Hülsen oder dergleichen hergestellt. Ragen die außen liegenden Schenkel der Ableiter 72, 74 über die Ebene der jeweiligen Flachseite 12, 14 hinaus oder sind sie so in Richtung der Ebene geneigt, dass wenigstens ihre äußeren Abschnitte über diese Ebene hinausragen, ist bei Aneinanderlegen mehrerer Zellen 10 unmittelbar eine elektrische Verbindung hergestellt.

In alternativen, gleichwohl ebenso bevorzugten Abwandlungen können die Ableiter 72, 74 U-förmig oder J-förmig gebogen sein und kann sich der außen liegende Schenkel wenigstens ein wenig an der jeweiligen Stirnseite 16, 18 der Zelle 10 entlang erstrecken.

Fig. 15 zeigt in einer Längsschnittdarstellung entsprechend Fig. 3 eine weitere Zelle 10.

Bei dieser Zelle umgeben die Halbschalen 24, 26 das Folienpaket 34 straff und üben dabei eine fügende Kraft auf das Folienpaket 34 aus. Anders als bei der in Fig. 13 gezeigten Zelle lassen die Halbschalen 24, 26 bei der vorliegenden Zelle die Stirnflächen des Folienpakets 34 nicht frei, sondern fixieren diese spielfrei. So wird die Kontaktierung zwischen den Ableiterfahnen 36, 38 und den Halbschalen 24, 26 durch Kraftschluss verwirklicht.

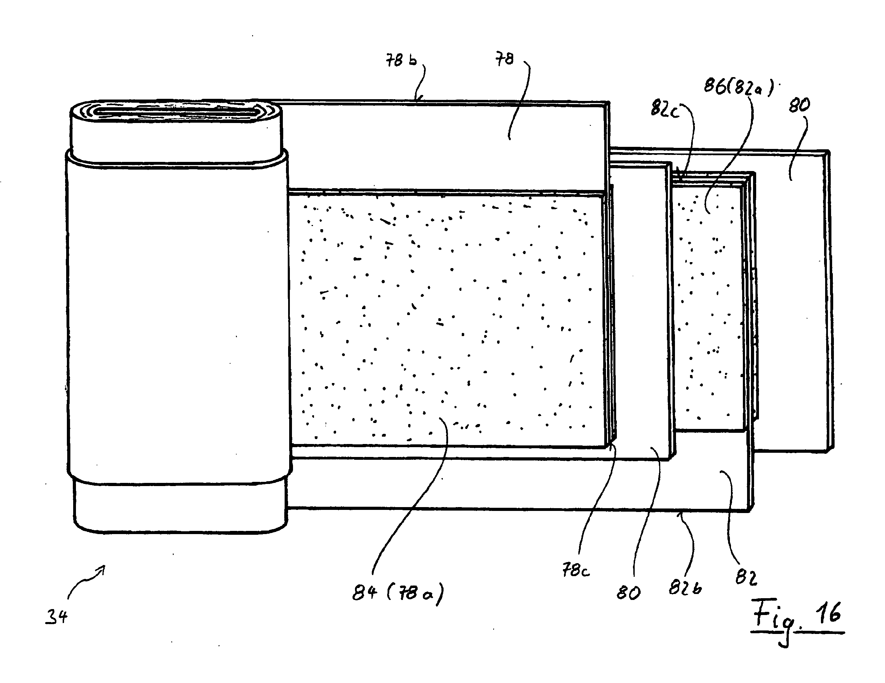

Fig. 16 zeigt einen beispielhaften Aufbau des Folienpakets 34 der Zelle 10 in einem unfertigen Zustand (während der Herstellung) in räumlicher Darstellung als eine bevorzugte Ausführungsform der vorliegenden Erfindung.

Auf einem in der Figur nicht näher dargestellten Wickeldorn oder Wickelkern sind mehrere Folien aufgewickelt, nämlich eine erste Kollektorfolie 78, eine Separatorfolie 80, eine zweite Kollektorfolie 82 und eine weitere Separatorfolie 80. Die erste Kollektorfolie 78 trägt eine erste Beschichtung 78a, welche eine erste Elektrodenschicht 78 bildet, und die zweite Kollektorfolie 82 trägt eine zweite Beschichtung 82a, welche eine zweite Elektrodenschicht 86 bildet. Obschon in der Figur nicht näher dargestellt, sind die Kollektorfolien 78, 82 jeweils beidseitig beschichtet.

Die erste Beschichtung 78a ist auf der ersten Kollektorfolie 78 so aufgebracht, dass ein oberer Rand 78b auf der in der Figur oberen Seite frei bleibt; die erste Beschichtung 78a reicht jedoch bis zu dem unteren Rand 78c der ersten Kollektorfolie 78. Entsprechend ist die zweite Beschichtung 82a ist auf der zweiten Kollektorfolie 82 so aufgebracht, dass ein unterer Rand 82b auf der in der Figur unteren Seite frei bleibt; die zweite Beschichtung 82a reicht jedoch bis zu dem oberen Rand 82c der zweiten Kollektorfolie 82. Der untere Rand (mit Beschichtungsmaterial belegte Rand) 78c der ersten Kollektorfolie 78 fluchtet in Dickenrichtung des Wickels (des Folienpakets 34) mit dem Ende des beschichteten Bereichs an dem freien Ende 82b der zweiten Kollektorfolie 82, und der obere Rand (belegte Rand) 82c der zweien Kollektorfolie 78 fluchtet mit dem Ende des beschichteten Bereichs an dem freien Ende 78b der ersten Kollektorfolie 78. Die Separatorfolien 80 überlappen den oberen und unteren Rand der Beschichtungen 78a, 82a, sodass eine zuverlässige Isolierung zwischen den Kollektorfolien 71 gegeben ist. Ein ähnlicher Aufbau ist für einen zylindrischen Folienwickel aus der eingangs erwähnten EP 1 610 410 B9 bekannt.

Die Folien liegen als Endlosbänder vor und werden auf dem Wickeldorn so lange aufgewickelt, bis ihre gesamte Fläche den gewünschten Zellenparametern, insbesondere der gewünschten Kapazität der Zelle 10, entspricht. Sodann werden die Bänder abgeschnitten und das freie Ende, beispielsweise mittels eines Klebebandes, fixiert.

Die in dem fertigen Wickel (Folienpaket) 34 über die Separatorfolien 80 hinausragenden freien Enden 78b, 82b der Kollektorfolien 78, 82 bilden Ableiterfahnen des Folienpakets 34 (vgl. 36, 38 in den Fign. 2 bis 13). Sie können lang ausgebildet sein, um in Dickenrichtung zusammengefasst und kontaktiert zu werden (wie etwa in Fign. 2 bis 12 gezeigt) oder kurz, um stirnseitig auf Druck kontaktiert zu werden (wie etwa in Fig. 13 gezeigt).

In einer nicht näher dargestellten, ebenfalls bevorzugten Abwandlung können die Elektrodenschichten 78, 86 auch durch Beschichtungen auf den Separatorfolien 80 ausgebildet sein. Dabei würde jede Separatorfolie auf einer der ersten Kollektorfolie zugewandten Seite eine erste Beschichtung und auf einer der zweiten Kollektorfolie zugewandten Seite eine zweite Beschichtung tragen.

In einer weiteren bevorzugten Abwandlung können die Separatorfolien durch eine weitere Beschichtung aus einem Separatormaterial, die auf jeweils eine oder beide Seiten der Kollektorfolien 78, 82 aufgebracht sind, ersetzt sein.

Nach dem Aufwickeln des Folienpakets 34 kann der Wickeldorn entfernt werden. Er kann aber auch im Wickel verbleiben und beispielsweise, aber nicht nur, zur passiven Wärmeableitung, als Stütze und/oder als weiteres Stromableitelement dienen.

In einer alternativen Herstellungsart können die Folien 78, 80, 82 auch rund gewickelt und dann in eine flache Form gepresst werden. Zur Reduzierung von Dehnungen und Scherspannungen im Wickel kann die Wicklung auf einem runden Kern ausreichenden Durchmessers geschehen, der vor dem Flachpressen entfernt wird oder alternativ verbleibt.

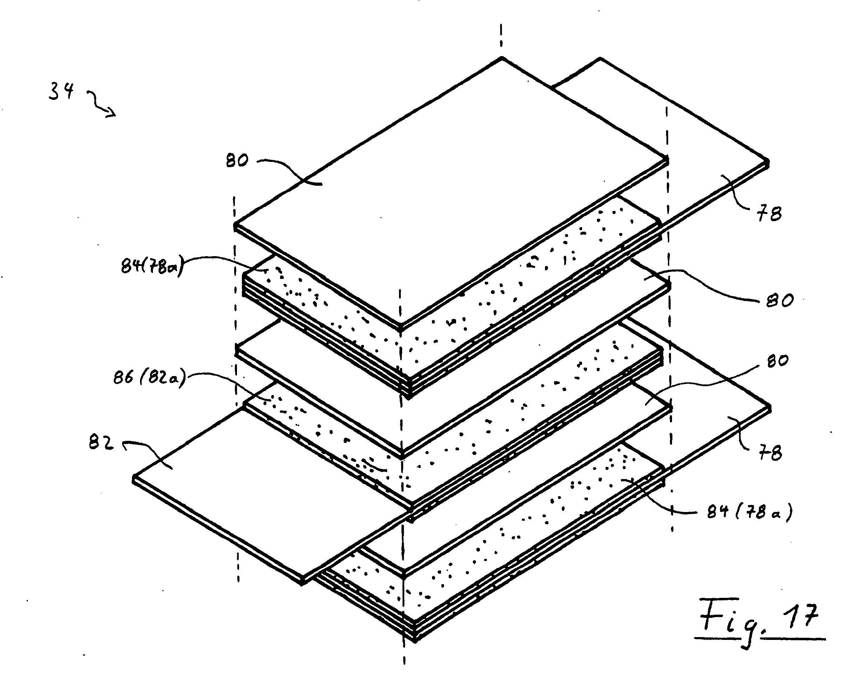

Fig. 17 zeigt einen anderen beispielhaften Aufbau des Folienpakets 34 der Zelle 10 in einem unfertigen Zustand (während der Herstellung) in räumlicher Darstellung als eine weitere bevorzugte Ausführungsform der vorliegenden Erfindung.

Ein Folienstapel weist eine erste Kollektorfolie 78, eine Separatorfolie 80, eine zweite Kollektorfolie 82 und eine weitere Separatorfolie 80 auf, wobei sich dieser Aufbau so oft wiederholt, wie es die gewünschten Parameter wie etwa die Kapazität der Zelle 10 erfordert. Die Folien weisen den gleichen Aufbau und die gleiche Funktion wie diejenigen in dem Wickel von Fig. 14 auf - insoweit sowie hinsichtlich möglicher Abwandlungen wird auf die diesbezügliche Beschreibung Bezug genommen -, liegen aber nicht als Endlosbänder vor, sondern sind so beschnitten, wie es der gewünschten Größe des Folienpakets entspricht.

Die in dem fertigen Stapel (Folienpaket) 34 über die Separatorfolien 80 hinausragenden freien Enden 78b, 82b der Kollektorfolien 78, 82 bilden Ableiterfahnen des Folienpakets 34 (vgl. 36, 38 in den Fign. 2 bis 13). Sie können lang ausgebildet sein, um in Dickenrichtung zusammengefasst und kontaktiert zu werden (wie etwa in Fign. 2 bis 12 gezeigt) oder kurz, um stirnseitig auf Druck kontaktiert zu werden (wie etwa in Fig. 13 gezeigt).

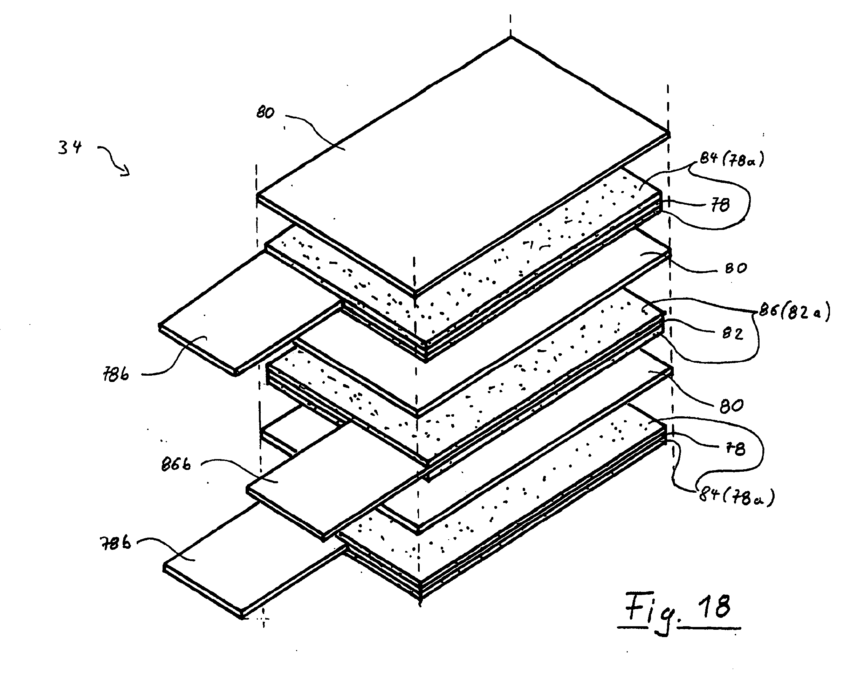

Fig. 18 zeigt eine Abwandlung des Stapelaufbaus von Fig. 17 in räumlicher Darstellung als eine weitere bevorzugte Ausführungsform der vorliegenden Erfindung.

Der Stapelaufbau von Fig. 18 unterscheidet sich von dem in Fig. 17 gezeigten dadurch, dass die freien Enden 78b, 82b der Kollektorfolien 78, 82 an der gleichen Stirnseite des Folienpakets herausragen. Dabei sind die freien Enden 78b der ersten Kollektorfolien 78 an einer Seite über mehr als die halbe Breite ausgeklinkt und sind die freien Enden 82b der zweiten Kollektorfolien 82 an der anderen Seite über mehr als die halbe Breite ausgeklinkt, sodass freien Enden 78b, 82b Laschen bilden, die sich in Stapelrichtung nicht überlappen. Dieser Stapelaufbau ist für Anordnungen geeignet, an welcher die Stromaufnahme und -ableitung auf der gleichen Stirnseite des Folienpakets 34 erfolgt.

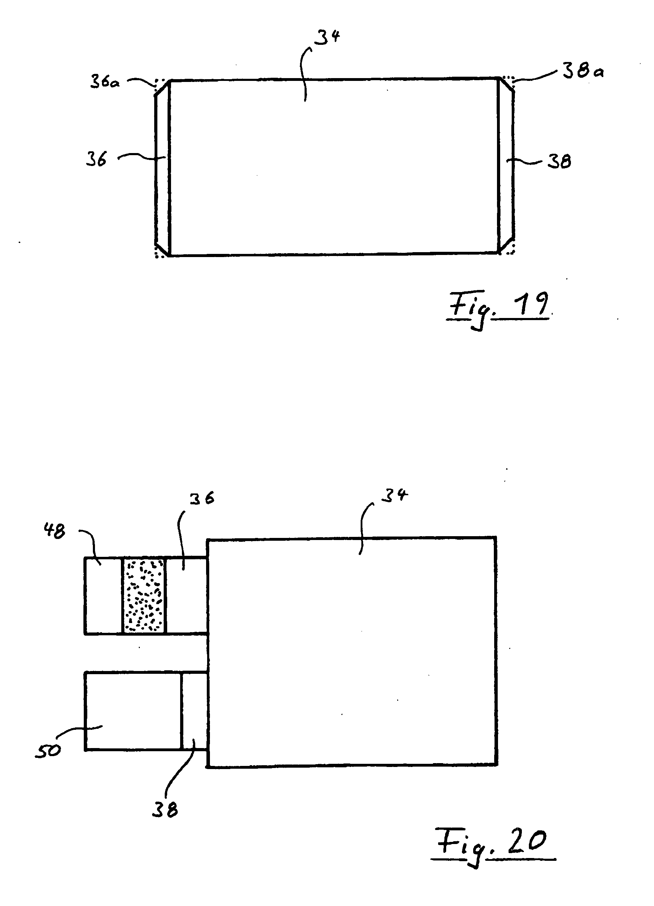

Fig. 19 zeigt in einer Draufsicht eine Abwandlung des Folienpakets 34 als eine weitere bevorzugte Ausführungsform der vorliegenden Erfindung.

Gemäß der Darstellung in Fig. 18 weisen die Ableiterfahnen 36, 38 randseitige Ausklinkungen 36a, 38a auf (vgl. gepunktete Linien in Fig. 18). Die Ausklinkungen 36a, 38a dienen einer Verbesserung der Kontaktierung in der Verpackung. Diese bevorzugten Ausführungsform erweist sich insbesondere, aber nicht nur, zur Anwendung mit der in Fig. 13 gezeigten Zelle als geeignet.

Fig. 20 zeigt in einer Draufsicht eine Abwandlung des Folienpakets 34 von Fig. 7 mit Ableitern 48, 50 als eine weitere bevorzugte Ausführungsform der vorliegenden Erfindung.

Gemäß der Darstellung in Fig. 20 ist auf den Ableitfahnen 36 auf einer dem zugehörigen Ableiter abgewandten Seite eine exotherme Lötfolie aufgebracht. Die exotherme Lötfolie ist mit Nanometer-Reaktivmultischichten ausgebildet. Diese dient als kontrollierter Energiespeicher, der durch äußere Einflüsse wie etwa Temperatur, einen Laserimpuls oder andere gezündet werden kann und dann lokal und kurzzeitig hohe thermische Energie abgibt. Die Lötfolie ist beispielsweise so ausgelegt, dass sie bei einer definierten Überladung des Folienpakets 34 (Zündimpuls) zündet und die Ableiterfahnen 36 durchschmilzt. Dies unterbricht den Stromfluss in die Zelle. Die Lötfolie dient somit als Mehrschicht-Aktivsicherung.

In einer alternativen, gleichwohl ebenso bevorzugten Abwandlung kann die Nanometer-Reaktivmultischicht auch auf die Ableiterfahnen 36 aufgedampft oder auf andere Weise abgelagert sein. Eine solche Schicht kann bevorzugt auf jeder der Ableiterfahnen 36 oder nur auf einer (insbesondere der äußersten) vorgesehen sein. Die Schicht kann in einer weiter bevorzugt Abwandlung auch auf der dem Ableiter zugewandten Seite vorgesehen sein. In einer weiteren bevorzugten Abwandlung kann die Nanometer-Reaktivmultischicht auf den Ableiterfahnen 36, 38 beider Pole vorgesehen sein.

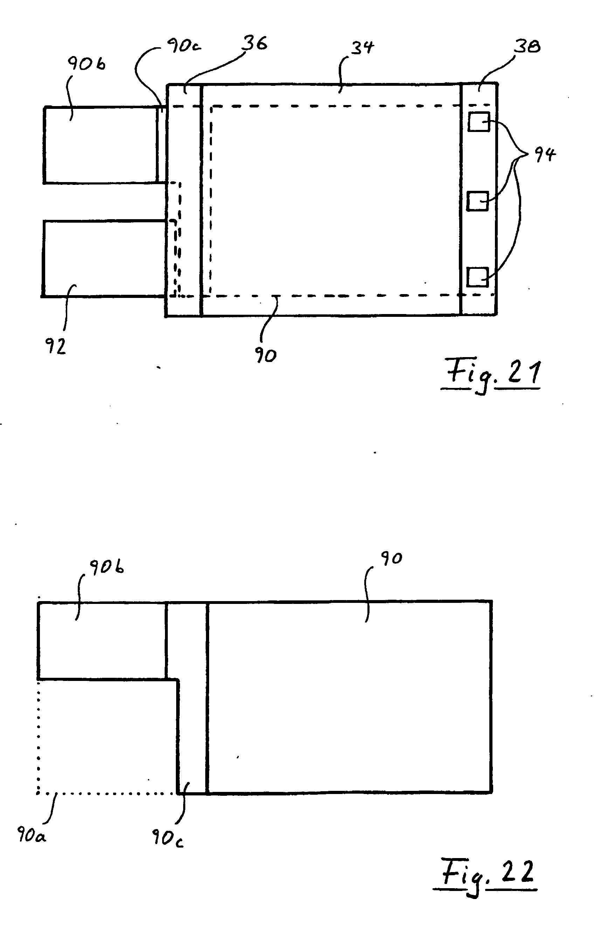

Fig. 21 zeigt in einer schematisierten Draufsicht eine Abwandlung des Folienpakets 34 von Fig. 16 im fertig gewickelten und kontaktierten Zustand als eine weitere bevorzugte Ausführungsform der vorliegenden Erfindung, und Fig. 22 zeigt in gleicher Ansicht einen Wickeldorn zur Verwendung in dem Folienpaket 34 dieser Ausführungsform.

Das Folienpaket 34 ist im Wesentlichen wie in Fig. 16 dargestellt ausgebildet, wobei an gegenüberliegenden Stirnseiten gelegene, freie Enden der Kollektorfolien Ableiterfahnen 36, 38 bilden. Das Folienpaket ist gemäß der Darstellung in Fig. 21 auf einem Wickeldorn 90 aufgewickelt, der in Fig. 22 noch einmal einzeln dargestellt ist. Der Wickeldorn 90 weist wenigstens im Wesentlichen die Form einer rechteckigen Platte auf. Der Wickeldorn weist an einer seiner Schmalseiten, die einer Stirnseite der Zelle entspricht, eine wenigstens im Wesentlichen rechteckige Ausnehmung 90a (gestrichelte Linie in Fig. 22) in einer Breite auf, die in etwa, vorzugsweise etwas mehr als der halben Breite der Platte entspricht. Die Gesamtlänge des Wickeldorns 90 ist größer als die Länge des Folienpakets 34, und die durch die Ausnehmung 90a übrig gelassene Länge des Wickeldorns 90 entspricht wenigstens im Wesentlichen der Länge des Folienpakets 34. Die Ausnehmung 90a definiert eine Lasche 90b entsprechender Länge, die von einer Schmalseite des durch die Ausnehmung 90a nicht betroffenen Teils des Wickeldorns 90 abragt.

Der Wickeldorn ist aus einem Leitermaterial wie etwa Kupfer, Aluminium oder dergleichen oder einer Legierung davon hergestellt und weist in einem Bereich, in welchem der durch die Ausnehmung 90a nicht betroffene Teil des Wickeldorns 90 in die Lasche 90b übergeht, eine Isolierung 90c auf. Die Isolierung 90c ist vorzugsweise in Form einer Beschichtung aufgetragen sein, kann alternativ aber auch beispielsweise in Form eines Lacks oder dergleichen aufgetragen, als Band umlaufend aufgeschrumpft oder aufgeklebt sein.

Gemäß der Darstellung in Fig. 21 ragt die Lasche 90b des Wickeldorns 90 im Bereich der Ableiterfahnen 36 der einen Stirnseite des Folienpakets 34 stirnseitig heraus. Die Ableiterfahnen 36 auf dieser Stirnseite sind mit einem Ableiter 92 verschweißt. Der Ableiter 92 ist etwas schmäler als die halbe Breite des Folienpakets 34 und überlappt in Dickenrichtung des Folienpakets gesehen die Lasche 90c des Wickeldorns 90 nicht. Die Ableiterfahnen 38 der anderen Stirnseite des Folienpakets 34 sind mittels Schweißpunkten 94 miteinander und mit dem Wickeldorn 90 verbunden.

Die Breite der Isolierung 90c auf der Oberfläche des Wickeldorns 90 ist so bemessen, dass die Ableiterfahnen 36 auf der Stirnseite der Lasche 90b zuverlässig von dem Wickeldorn 90 isoliert sind.

In dieser bevorzugten Ausführungsform bildet die Lasche 90b des Wickeldorns 90 einen Ableiter für die Ableiterfahnen 38 auf der gegenüberliegenden Stirnseite des Folienpakets 34. Ebenso kann der Wickeldorn 90 über die Lasche 90b als wirksames Wärmeleitelement bzw. Kühlelement ausgenutzt werden.

Es ist vorteilhaft, wenn die Ableiterfahnen 38 der der Lasche 90b des Wickeldorns 90 gegenüberliegenden Stirnseite des Folienpakets 34 von denjenigen Kollektorfolien gebildet werden, die in der ersten Wicklungslage dem Wickeldorn 90 am nächsten liegen.

In optionalen, gleichwohl ebenso bevorzugten Abwandlungen können die Verbindungen durch Lötung oder Klammerung oder Klebung mittels eines leitfähigen Klebstoffs erfolgen.

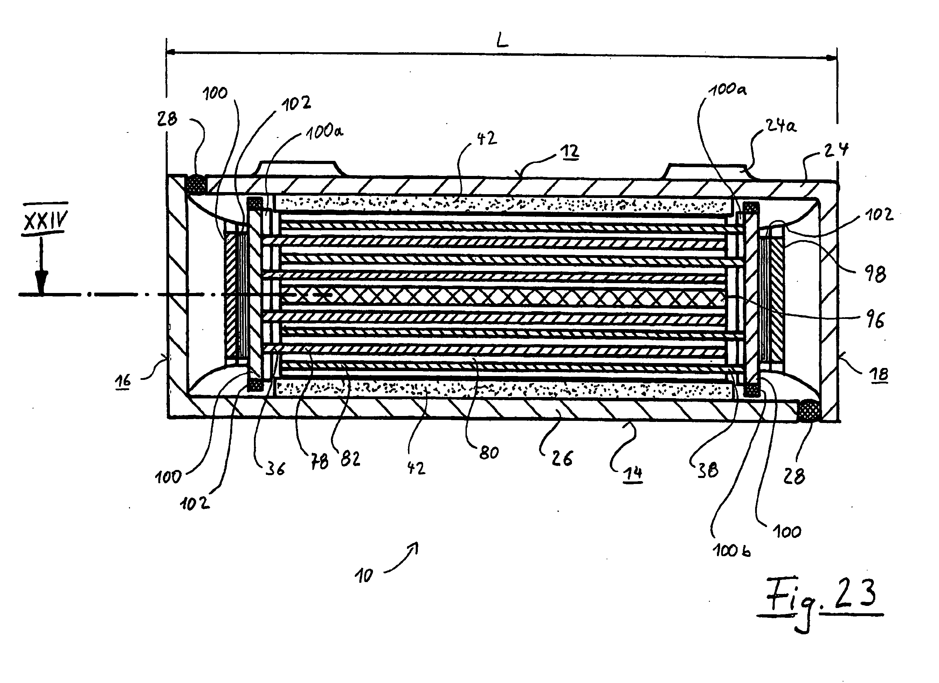

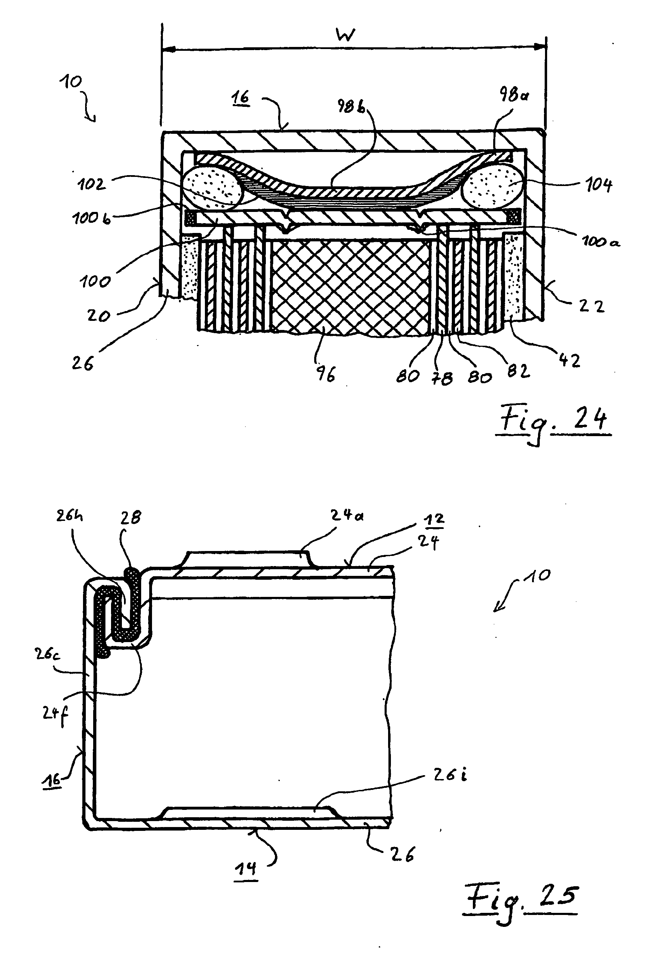

Fig. 23 zeigt eine Abwandlung der in Fig. 13 gezeigten Zelle in einer entsprechenden Längsschnittdarstellung, und Fig. 24 zeigt einen stirnseitigen Bereich der Zelle 10 in einer vergrößerten Horizontalschnittansicht entlang einer durch eine strichpunktierte Linie in Fig. 23 symbolisierten Ebene in Blickrichtung eines Pfeils "XXIV".

Gemäß der Darstellung in Fig. 23 wird ein Folienpaket 34 der Zelle 10 durch einen Folienwickel gebildet, wie er beispielsweise in Fig. 16 gezeigt ist. Auf einem Flachwickeldorn 96 sind eine erste Kollektorfolie 78 und eine zweite Kollektorfolie 82 gewickelt, die jeweils mit Elektrodenschichten beschichtet sind. Zwischen den Kollektorfolien 78, 82 vorhandenes Elektrodenmaterial (Beschichtungsmaterial) und Separatormaterial (Separatorfolien 80) sind in Fig. 23 nicht schraffiert, um die Darstellung nicht zu überfrachten. Die Kollektorfolien 78, 82 ragen mit ihrem unbeschichteten Ende an unterschiedlichen Stirnseiten des Folienpakets 34 heraus und bilden die Ableiterfahnen 36, 38 des Folienpakets 34. Zwischen den Flachseiten und Flanken des Folienpakets 34 und den Innenflächen der Halbschalen 24, 26 des Zellgehäuses ist jeweils eine Dämpfung 42 vorgesehen.

Bei der Zelle 10 wird eine erste Stirnseite 16 der Zelle 10 durch das Untergehäuse 26 gebildet und wird eine zweite Stirnseite 18 der Zelle 10 durch das Obergehäuse 24 gebildet. Eine aus einem leitfähigen Material hergestellte Kontaktfeder 98 stellt jeweils durch Kraftschluss auf Druck eine elektrische Verbindung zwischen der stirnseitigen Innenseite der Unterschale 26 und den Ableiterfahnen 36 bzw. zwischen der stirnseitigen Innenseite der Oberschale 26 und den Ableiterfahnen 38 her.

Man beachte, dass bei dieser Zelle nur an der Oberseite 12 der Zelle 10 Erhebungen 24a in der Oberschale 24 ausgebildet sind, an der Unterseite 14 aber keine Erhebungen vorgesehen sind. Die Erhebungen 24a der Zelle 10 kontaktieren demnach die durch die Unterschale 26 gebildete Flachseite 14 einer gegebenenfalls benachbarten Zelle in einer Stapelanordnung von Zellen 10 direkt.

Der Aufbau der kraftschlüssigen Verbindung ist in Fig. 24 deutlicher dargestellt. In Fig. 24 ist die Stirnseite 16 der Zelle 10 (der Unterschale 26) mit dem zugehörigen Abschnitt des Folienpakets 34 gezeigt.

Gemäß der Darstellung in Fig. 23 weist die Druckfeder 98 eine geschwungene Form mit zwei freien Enden 98a, die sich an der Halbschale 26 abstützen, und einem bogenförmigen, zu der Stirnseite des Folienpakets 34 weisenden Mittelteil 98b auf. Der Druck der Kontaktfeder 98 und die elektrische Verbindung werden über eine Kontaktplatte 100 vermittelt, die zwischen der Kontaktfeder 68 und den Ableiterfahnen 36 des Folienpakets 34 angeordnet ist. Der Mittelteil 98b der Kontaktfeder schmiegt sich über eine ausreichende Strecke an die Kontaktplatte 100, und die freien Enden 98a schmiegen sich über eine ausreichende Strecke an die Halbschale 26, um eine zuverlässige Stromübertragung sicherzustellen. Die Druckplatte 100 weist Kerben 100a auf, die mit einer Spitze zu den Ableiterfahnen 36 weisen und bei Druck stirnseitig in diese eindringen, um den Stromübergang zu verbessern. Randseitig ist auf der Kontaktplatte 100 eine Isolierung 100b aufgebracht, welche die Kontaktplatte 100 elektrisch von den Halbschalen 24, 26 isoliert. Der Aufbau ist auf der anderen Stirnseite (Seite der Ableiterfahnen 38) insoweit identisch.

Wie auch in Fig. 23 gezeigt, ist auf dem Mittelteil 98b der Kontaktfeder 98 auf einer der Kontaktplatte 100 zugewandten Seite eine exotherme Lötfolie 102 aufgebracht. Die exotherme Lötfolie 102 ist mit Nanometer-Reaktivmultischichten ausgebildet. Diese dient als kontrollierter Energiespeicher, der durch äußere Einflüsse wie etwa Temperatur, einen Laserimpuls oder andere gezündet werden kann und dann lokal und kurzzeitig hohe thermische Energie abgibt. Die Lötfolie 102 ist beispielsweise so ausgelegt, dass sie bei einer definierten Überladung des Folienpakets 34 (Zündimpuls) zündet und die Kontaktfeder 98 durchschmilzt. Dies unterbricht den Stromfluss in die Zelle. Die Lötfolie 102 dient somit als Mehrschicht-Aktivsicherung. Isolierpackungen 104, die zwischen den freien Enden 98a der Kontaktfedern 98 und der Kontaktplatte 100 angeordnet sind, halten auch bei durchgeschmolzener Kontaktfeder 98 den Abstand zwischen der Kontaktplatte 100 und den Halbschalen 24, 26 aufrecht.

In einer optionalen oder alternativen Abwandlung kann eine exotherme Lötfolie auf einer der Kontaktplatte abgewandten Seite aufgebracht sein oder kann auf der Kontaktplatte 100 selbst aufgebracht sein; eine solche Anordnung kann beispielsweise, aber nicht nur, bevorzugt sein, wenn die Leitfähigkeit der exothermen Lötfolie hinter derjenigen der Kontaktplatte und/oder der Kontaktfeder zurücktritt. In einer weiteren Abwandlung kann die Nanometer-Reaktivmultischicht aufgedampft oder auf andere Weise abgelagert sein. Obschon bei der vorliegenden Zelle die exotherme Lötfolie 102 auf den Kontaktfedern 98 beider Stirnseiten 16, 18 vorgesehen ist, kann diese in einer weiteren Abwandlung auf einer der Stirnseiten 16, 18 weggelassen werden. In weiteren Zellen können mehr als zwei Kerben 100a vorgesehen sein, um die Kontaktierung weiter zu verbessern.

Fig. 25 zeigt eine weitere Zelle 10. Es handelt sich um eine Längsschnittansicht wie in Fig. 3, wobei nur der Bereich der einen Stirnseite 16 dargestellt ist. Inneneinbauten der Zelle 10 sind in der Figur weggelassen.

Gezeigt ist eine Verbindung zwischen der Oberschale 24 und der Unterschale 26 der Zelle 10. Gemäß der Darstellung in Fig. 25 wird die Stirnseite 16 wenigstens im Wesentlichen von dem stirnseitigen Rand (Stirnwand) 26c der Unterschale 26 gebildet, und die Oberschale 24 stößt im Bereich der oberen Kante auf die Stirnwand 26. Bei zuvor beschriebenen und dargestellten Zellen war die Verbindung zwischen der Oberschale 24 und der Unterschale 26 weist die Oberschale 24 stumpf, und Kräfte, die durch äußere Einwirkung oder Innendruck der Zelle 10 auf die Naht zwischen den Oberschale 24 und der Unterschale 26 wirken können, wurden allein durch die Haftwirkung der Dichtung 28 aufgenommen. Bei der vorliegenden Zelle wird die Verbindung zwischen der Oberschale 24 und der Unterschale 26 wenigstens im Bereich der Stirnwand wenigstens zum Teil durch Formschluss verwirklicht bzw. unterstützt. Hierzu ist das zu der Stirnwand 16 weisende Ende der Oberschale 24 zunächst rechtwinklig nach unten abgewinkelt und sodann U-förmig nach oben gebogen und bildet so einen Bördelrand 24f. Das obere Ende des stirnseitigen Randes 26c der Unterschale 26 ist U-förmig nach innen gebogen und bildet so eine Bördelung 26h aus, die in dem U-förmig gebogenen Abschnitt des Bördelrandes 24f der Oberschale 24 ruht. Die Dichtung 28 erstreckt sich bei dieser Ausführungsvariante im dargestellten Bereich mäanderförmig zwischen den aneinander anliegenden Abschnitten der Halbschalen 24, 26.

Bei dieser Zelle werden Bewegungen zwischen den Halbschalen 24, 26 in Längsrichtung sowie in Dickenrichtung, jedenfalls im Sinne einer Öffnung, durch die aneinander anliegenden Abschnitten der Halbschalen 24, 26 blockiert und die entsprechenden Kräfte neutralisiert. Die Dichtung 28 dient hier noch, soweit erforderlich, der elektrischen Isolierung und der atmosphärischen Abdichtung zwischen den Halbschalen 24, 26, nimmt aber keine Zugkräfte in der Verbindungsnaht auf.

Gezeigt ist eine Ausbildung von Kontaktflächen an den Flachseiten 12, 14 der Zelle 10. Gemäß der Darstellung in Fig. 25 sind an der Oberseite 12 Erhebungen 24a in der Oberfläche der Oberschale 24 ausgebildet, wie es bereits beschrieben wurde. Auf bisherige diesbezügliche Beschreibungen wird ausdrücklich Bezug genommen. An der Unterseite 14 der Zelle 10 sind Einsenkungen 26i in der Oberfläche der Unterschale 26 ausgebildet, die mit den Erhebungen 24a der Oberschale fluchten. Im Zusammenbau mehrerer Zellen 10 ruhen die Erhebungen 24a einer Zelle 10 in den Einsenkungen 26i einer jeweils nächsten Zelle 10. Dabei ist die Einsenkung 26i der Unterschale 26 ein wenig seichter als die Erhebung 24a der Oberschale 24 hoch ist. Auf diese Weise kann ein ausreichender Abstand zwischen der Oberschale 24 der einen Zelle 10 und der Unterschale 26 der nächsten Zelle 10 und ein zuverlässiger Kontakt im Bereich der Erhebungen 24a und Einsenkungen 26i sichergestellt werden. Seitliche Verschiebungen der Zellen 10 untereinander können zuverlässig begrenzt oder gar verhindert werden. Durch Erhebungen 24a und Einsenkungen 26i wird die Pollage der Zelle 10 zuverlässig gekennzeichnet.

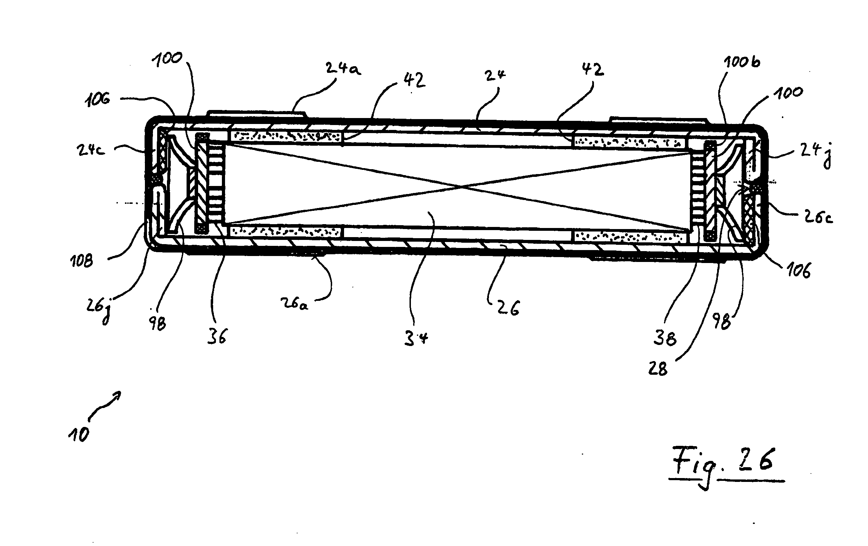

Fig. 26 zeigt in einer Längsschnittansicht entsprechend Fig. 3 eine weitere Zelle 10.

Bei dieser Zelle sind die Halbschalen 24, 26 wenigstens im Wesentlichen identisch aufgebaut. Insbesondere werden die Stirnseiten 16, 18 (sowie die in der Figur nicht sichtbaren Flanken 20, 22, vgl. Fig. 1) jeweils zur Hälfte von den stirnseitigen Rändern 24c, 26c (und den in der Figur nicht sichtbaren seitlichen Rändern 24d, 26d, vgl. Fig. 9 mit dort anders ausgebildeten Stirnseiten) gebildet. Die Dichtung 28 erstreckt sich demgemäß wenigstens im Wesentlichen umlaufend auf halber Höhe in Dickenrichtung der Zelle 10.

Bei dieser Zelle sind Kontaktfedern 98 eingesetzt, deren Form der in Fig. 23 und Fig. 24 dargestellten Zelle entspricht. Insbesondere weisen die Kontaktfedern 98 jeweils eine geschwungene Form mit zwei freien Enden (98a, vgl. Fig. 24), die sich an der Einhausung abstützen, und einem bogenförmigen, zu der Stirnseite des Folienpakets 34 weisenden Mittelteil 98b auf. Der Druck der Kontaktfeder 98 und die elektrische Verbindung werden über eine Kontaktplatte 100 vermittelt, die zwischen der Kontaktfeder 68 und den Ableiterfahnen 36 des Folienpakets 34 angeordnet ist.

Gemäß der Darstellung in Fig. 26 sind auf einer Stirnseite 16, 18 die Ränder 24c, 26c der Halbschalen 24, 26 nach innen umgebogen, um verdoppelte Ränder 24j, 26j, zu bilden (d.h., dort ist die Blechdicke verdoppelt). Auf der jeweils anderen Stirnseite ist ein Isolierstreifen 106 an der Innenseite angeordnet, dessen Dicke wenigstens im Wesentlichen einer Blechdicke entspricht. Im Zusammenbau werden die Halbschalen 24, 26 so zusammengesetzt, dass die verdoppelten Ränder 24c, 26c jeweils einem Rand 24c, 26c mit einem Isolierstreifen gegenüberliegen.

Bedingt durch den oben beschriebenen Aufbau sitzen die freien Ränder der Kontaktfedern 98 jeweils zu einer Hälfte auf einem verdoppelten Rand 24j, 26j der zu kontaktierenden Halbschale 24, 26 und zur anderen Hälfte auf einem Isolierstreifen 106, welcher die Kontaktfeder 98 von der nicht zu kontaktierenden Halbschale 24, 26 elektrisch isoliert, auf. Auf diese Weise wird auf jeder Stirnseite 16, 18 jeweils eine Halbschale 26, 24 mit der Kontaktfeder 98 und somit mit den Ableiterfahnen 36, 38 einer Stirnseite des Folienpakets 34 verbunden, und die andere Halbschale 24, 26 wird zuverlässig davon isoliert. So können die Halbschalen 24, 26 bzw. deren an den Flachseiten vorgesehenen Erhebungen 24a, 26a als Pole der Zelle 10 eingesetzt werden.

Bei dieser Zelle sind die Erhebungen 24a der Oberschale 24 kleiner ausgebildet als die Erhebungen 26a der Unterschale 26, um die Pollage der Zelle 10 von zu markieren. Wie in Fig. 26 gezeigt, ist die gesamte Außenfläche der Zelle 10 mit Ausnahme der Erhebungen 24a, 26a mit einem Überzug 108 versehen. Der Überzug 108 ist aus einem elastischen, elektrisch isolierenden Material wie etwa einem Gummi- oder Silikonwerkstoff hergestellt und bewirkt einerseits eine weitere Abdichtung der Zelle 10 und andererseits eine elektrische Isolierung von Abschnitten der Zelle 10, die nicht als Pole dienen sollen.

Eine exotherme Lötfolie (hier nicht näher dargestellt) kann an geeigneter Stelle im Bereich der Kontaktfedern 98 vorgesehen sein, um eine Mehrschicht-Aktivsicherung wie oben beschrieben zu verwirklichen. Eine Isolierpackung (104, vgl. Fig. 24) ist in Fig. 26 nicht näher dargestellt, kann aber vorgesehen sein.

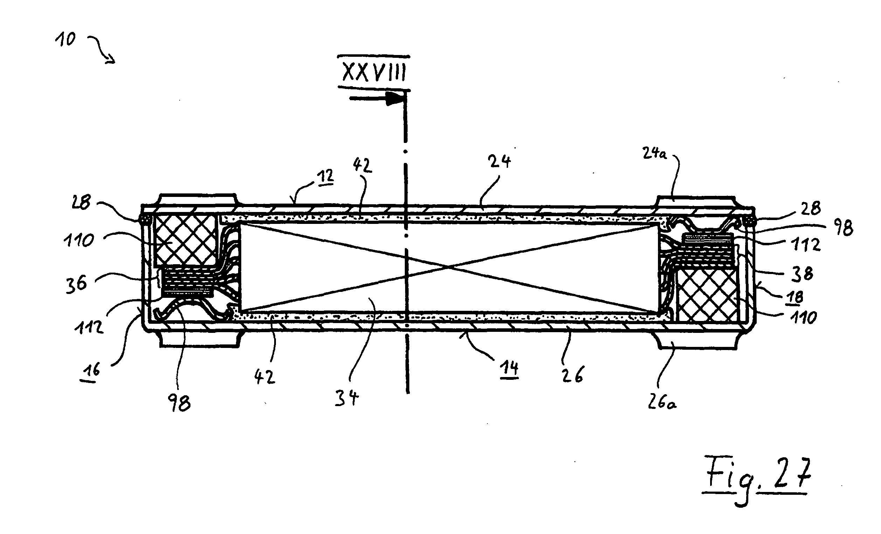

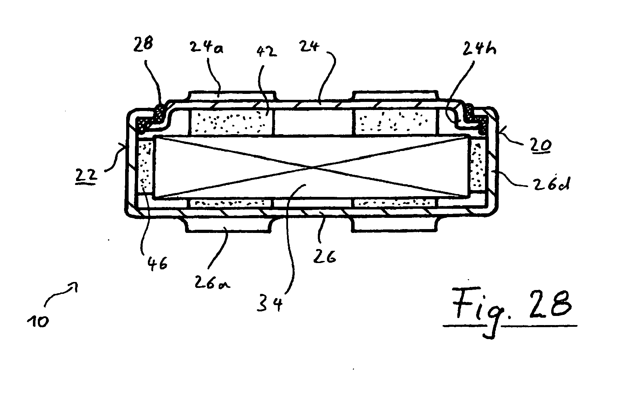

Fig. 27 zeigt in einer Längsschnittansicht entsprechend Fig. 3 eine weitere Zelle 10, und Fig. 28 zeigt die Zelle 10 in einer Querschnittsansicht entlang einer in Fig. 27 durch eine strichpunktierte Linie symbolisierten Ebene in Blickrichtung eines Pfeils "XXVIII".

Bei dieser Zelle weist die Oberschale 24 eine wenigstens im Wesentlichen plattenförmige Gestalt auf und weist die Unterschale 26 eine wenigstens im Wesentlichen wannenförmige Form auf. Kontaktabschnitte (Pole) der Zelle 10 werden durch Erhebungen 24a, 26a definiert, die auf den Flachseiten 12, 14 der Zelle 10 (der Halbschalen 24, 26) ausgebildet sind. Die Oberschale 24 sitzt auf dem Rand der Unterschale 26 auf, und die Dichtung 28 ist umlaufend dazwischen ausgebildet.

Der Folienstapel 34 weist stirnseitig gegenüberliegend Ableiterfahnen 36, 38 auf, die mit ihren Flachseiten jeweils aufeinanderliegen. Die Ableiterfahnen 36 im Bereich der Stirnseite 16 liegen mit ihren Flachseiten aufeinander und sind über eine Kontaktstütze 110 gegen die Oberschale 24 isoliert. An der Unterseite der Ableiterfahnen 36 ist eine exotherme Lötfolie 112 angeordnet, die elektrisch leitfähige Nanometer-Multischichten aufweist. Eine Kontaktklammer 98 stützt sich gegen die Unterschale 26 ab und drückt von unten gegen die Lötfolie 112. Auf diese Weise wird ein elektrischer Kontakt zwischen den Ableiterfahnen 36 und der Unterschale 26 hergestellt. Die Lötfolie 112 wirkt als Mehrschicht-Aktivsicherung, die beispielsweise, aber nicht nur, bei Überladung des Folienstapels reagiert und wenigstens entweder die Ableiterfahnen 36 oder die Kontaktfeder 98 durchschmilzt.

Gleichermaßen liegen die Ableiterfahnen 38 im Bereich der anderen Stirnseite 18 mit ihren Flachseiten aufeinander und sind über eine Kontaktstütze 110 gegen die Unterschale 26 isoliert. An der Oberseite der Ableiterfahnen 38 ist eine exotherme Lötfolie 112 angeordnet, die elektrisch leitfähige Nanometer-Multischichten aufweist. Eine Kontaktklammer 98 stützt sich gegen die Oberschale 24 ab und drückt von oben gegen die Lötfolie 112. Auf diese Weise wird ein elektrischer Kontakt zwischen den Ableiterfahnen 38 und der Oberschale 24 hergestellt.

Erhebungen 24a, 26a auf der Oberschale 24 bzw. der Unterschale 26a dienen als Kontaktabschnitte (Pole) der Zelle. Auf bisherige diesbezügliche Beschreibungen wird ausdrücklich Bezug genommen. Bei der vorliegenden Zelle sind die Erhebungen 26a der Unterschale 26 höher ausgebildet als die Erhebung 24a der Oberschale 24. Auf diese Weise kann auch die Pollage der Zelle 10 zuverlässig gekennzeichnet werden.

Bei einer weiterhin Abwandlung ist die Lötfolie 112 nur auf einem der Ableiterfahnenpakete 36, 38 vorgesehen.

Fig. 28 zeigt die Zelle 10 in einer Querschnittsansicht entlang einer in Fig. 27 durch eine strichpunktierte Linie symbolisierten Ebene in Blickrichtung des Pfeils "XXVIII" und verdeutlicht den Aufbau einer Verbindung zwischen der Oberschale 24 und der Unterschale 26 im Bereich der Flanken 20, 22 der Zelle 10.

Gemäß der Darstellung in Fig. 28 sind die seitlichen Ränder 26d der wannenförmigen Unterschale an ihren freien Enden rechtwinklig nach innen abgewinkelt und weist die plattenförmige Oberschale 24 beidseits eine nach innen weisende Kröpfung 24h auf. Die Kröpfungen 24h der Oberschale 24 greifen jeweils unter die seitlichen Ränder 26d der Unterschale 26 und sind durch die Dichtung 28 voneinander isoliert. Dämpfungen 42, 46 sorgen für eine wenigstens im Wesentlichen erschütterungsfreie Abstützung des Folienpakets in der Einhausung (Halbschalen 24, 26) der Zelle 10 in Breiten- und Dickenrichtung.

In Längsrichtung der Zelle 10 werden Bewegungen des Folienstapels 34 durch die Kontaktstützen 110 begrenzt bzw. abgefedert. (Abstände zwischen den Ableiterfahnen 36 bzw. 38 untereinander und zu der Kontaktstütze 110 der jeweiligen Seite sind in der Figur zu Zwecken der Verdeutlichung überhöht dargestellt.)

Die vorliegende Erfindung wurde vorstehend anhand ausgewählter Ausführungsbeispiele mit zahlreichen Varianten und Abwandlungen beschrieben.

Obschon die vorliegende Erfindung vorstehend unter Bezugnahme auf konkrete Ausführungsbeispiele in ihren wesentlichen Merkmalen beschrieben wurde, versteht sich, dass die Erfindung nicht auf diese Ausführungsbeispiele beschränkt ist, sondern in dem durch die Patentansprüche vorgegebenen Umfang und Bereich abgewandelt und erweitert werden kann, beispielsweise. aber nicht ausschließlich, wie es nachstehend angedeutet ist.

Als Leitermaterialien für Ableiter, Gehäuseteile und dergleichen wurden vorstehend Aluminium, Kupfer und Legierungen hiervon erwähnt. Als bevorzugte Alternativen können auch Eisenlegierungen, Stahl, Neusilber oder dergleichen, auch in Legierungen, gewählt werden. Bevorzugt sind Kontaktflächen zur Verringerung des Übergangswiderstands beschichtet; als Beschichtungsmaterialien eignen sich bespielsweise, aber nicht nur, Silber, Gold oder ein anderes Edelmetall. Optional, jedoch ebenso bevorzugt, sind Kontaktflächen zur Verringerung des Übergangswiderstands angeraut.

In den vorstehend beschriebenen Ausführungsbeispielen, Varianten und Abwandlungen wurde auch vorgesehen, dass Stützen, Dichtungen, Dämpfungen oder dergleichen ohne ausdrückliche Befestigung in dem Gehäuse (Halbschalen 24, 26) angeordnet sind. In bevorzugten Abwandlungen sind solche Einbauteile an Gehäuseteile (Halbschalen 24, 26) angeklebt, angespritzt, eingespreizt (etwa zwischen Seitenwänden) oder anderweitig befestigt (beispielsweise, jedoch ohne Beschränkung der Allgemeinheit, formschlüssig).

Erhebungen 24a, 26a wurden vorstehend und in den Figuren kreisförmig dargestellt und beschrieben. Die kreisförmige Ausbildung ist ganz beispielhaft. In Abwandlungen können die Erhebungen 24a, 26a auch oval, quadratisch, rechteckig oder anders geformt sein. Durch die geometrische Form der Erhebungen 24a, 26a kann auch die Pollage der Zelle gekennzeichnet sein.

Die Erhebungen 24a, 26a können in einer optionalen, gleichwohl ebenso Abwandlung zur Verbesserung der Ebenheit und Parallelität plan geschliffen oder abgefräst sein.

In den vorstehend beschriebenen Ausführungsbeispielen, Varianten und Abwandlungen wurden, mit Ausnahme der in Fig. 26 gezeigten Zelle, die Halbschalen 24, 26 als blanke Blechteile dargestellt und beschrieben. In bevorzugten Abwandlungen können die Halbschalen 24, 26 überall dort, wo eine Kontaktierung nicht erwünscht ist, mit einem Isolator beschichtet, lackiert oder sonst überzogen sein. Insbesondere bei Zellen mit Ableitern (vgl. Fign. 7-12, 14) sind die Halbschalen 24, 26 vorzugsweise, gegebenenfalls wenigstens außen und dort, wo Ableiter angrenzen, isoliert.

In den vorstehend beschriebenen Ausführungsbeispielen, Varianten und Abwandlungen wurden Elektrodenmaterialien als Beschichtung auf Kollektorfolien angenommen und wurde ein Separator als zusätzliche Folie in einer Folienanordnung angenommen. Der Aufbau des aktiven Teils kann auch anders sein. Beispielsweise kann in bevorzugten Abwandlungen Elektrodenmaterial auf zwei Seiten einer zwischen Kollektorfolien angeordneten Separatorfolie aufgebracht sein oder als separate Zwischeneinlage zwischen Kollektor- und Separatorfolien vorgesehen sein. Andere Anordnungen können sich ebenfalls als vorteilhaft erweisen. Das Elektrodenpaket kann in einer weiteren bevorzugten Abwandlung von einer isolierenden Hülle eingefasst sein. Für eine weitere Optimierung der Raumausnutzung kann in einer weiteren bevorzugten Abwandlung ein Folienwickel beispielsweise, aber nicht nur, gemäß der in Fig. 16 gezeigten bevorzugten Ausführungsform der erfindungsgemäßen Zelle nach dem Wickeln an den seitlichen Flanken beschnitten sein, um einen wenigstens im Wesentlichen quaderförmigen Folienstapel zu erhalten.

Die vorliegende Erfindung betrifft galvanische Zellen, insbesondere galvanische Sekundärzellen des flachen Typs anwenden, bei welchen der aktive Teil aus einem laminierten Folienpaket von chemisch aktiven Materialien (Elektrodenmaterialien) zweier Arten, elektrisch leitenden Materialien (Kollektorfolien) und Trennschichten (Separatoren), ggf. mit einem Elektrolytmaterial getränkt, besteht. Das chemisch aktive Material der einen Art weist vorzugsweise eine Lithiumverbindung auf, und das chemisch aktive Material der anderen Art weist vorzugsweise Graphit auf. Der Separator weist vorzugsweise einen mikroporösen Elektrolyten auf.

Eine Kontaktfeder 68, 98 wurde im Zusammenhang mit diesbezüglichen Zellen vornehmlich in der Form einer geschwungenen Blattfeder dargestellt. In weiter bevorzugten Abwandlungen kann eine Kontaktfeder auch die Form einer Schraubenfeder, Kegelfeder, Tellerfeder, Membranfeder, Evolutfeder, Ringfeder, Blattfeder oder jede andere geeignete Federform aufweisen. In weiter bevorzugten Abwandlungen sind mehrere Federn in Reihe und/oder parallel zusammengefasst.

Es sei darauf hingewiesen, dass zahlreiche Merkmale, die im Zusammenhang mit einzelnen Zellen beschrieben wurde, auch in anderen Zellen anwendbar sind, soweit es nicht aus praktischen Gründen ausgeschlossen ist.

Eine erfindungsgemäße Galvanische Zelle ist mit einem aktiven Teil, einer Einhausung zur Aufnahme des aktiven Teils, und wenigstens zwei Polkontaktbereichen zur Kontaktierung des aktiven Teils von außerhalb der Einhausung ausgestattet, wobei der aktive Teil eine flache Folienanordnung mit elektrochemisch aktiven Materialien aufweist, wobei die Folienanordnung wenigstens eine erste Kollektorfolie und eine zweite Kollektorfolie aufweist, wobei die Einhausung ein erstes Einhausungsteil, das sich wenigstens im Wesentlichen entlang einer ersten Flachseite des aktiven Teils erstreckt, und ein zweites Einhausungsteil, das sich wenigstens im Wesentlichen entlang einer zweiten Flachseite des aktiven Teils erstreckt, aufweist, wobei das erste Einhausungsteil und das zweite Einhausungsteil den aktiven Teil aufnehmen, und wobei die Polkontaktbereiche jeweils mit den ersten oder den zweiten Kollektorfolien verbunden und von außerhalb der Einhausung kontaktierbar sind. Wenigstens eines, vorzugsweise beide, des ersten und des zweiten Einhausungsteils ist bzw. sind ein umgeformtes bzw. tiefgezogenes Bauteil.

Die vorstehend beschriebene Zelle 10 ist eine galvanische Zelle im Sinne der Erfindung. Die vorstehend beschriebenen Halbschalen 24, 26 sind Einhausungsteile und bilden im zusammengebauten Zustand eine Einhausung im Sinne der Erfindung. Das vorstehend beschriebene Folienpaket 34 ist ein aktiver Teil im Sinne der Erfindung. Die vorstehend beschriebenen Beschichtungen 78a, 82a sind, insbesondere, aber nicht nur, zusammen mit der vorstehend beschriebenen Separatorfolie 80, elektrochemisch aktive Materialien im Sinne der Erfindung. Vorstehend beschriebene Außenflächen der Halbschalen 24, 26, insbesondere soweit leitend und außen blank, insbesondere Erhebungen 24a, 26a oder Einsenkungen 26i und vorstehend beschriebene Ableiter 48, 50, 92, eine Lasche 90b eines Wickelkerns 90, insbesondere soweit außerhalb des Gehäuses zugänglich sind, sind Polkontaktbereiche der Zelle im Sinne der Erfindung. Vorstehend beschriebene Ableiterfahnen 36, 38 sind Elektrodenkontaktbereiche im Sinne der Erfindung. Vorstehend beschriebene Stützen 40, 44, 55, und Kontaktfedern 68, 98 sind elastische Bauteile im Sinne der Erfindung. Ein durch vorstehend beschriebene Abdichtung 28, 52 abgedichteter Spalt zwischen den Halbschalen 24, 26 ist eine Nahtstelle im Sinne der Erfindung. Ein in Fign. 21, 22 dargestellter Wickelkern 90 ist ein Wärmeleitelement und ein Stromleitelement im Sinne der Erfindung. Die Begriffe Wickeldorn und Wickelkern werden im Rahmen dieser Anmeldung synonym verwendet.

### Liste der Bezugszeichen:

- 10: Zelle (Flachkontaktzelle)
- 12: Oberseite (Flachseite)
- 14: Unterseite (Flachseite)
- 16, 18: Stirnseiten (Schmalseiten)
- 20, 22: Flanken (Schmalseiten)
- 24: Oberschale (Halbschale)
- 24a: Erhebung (Kontaktabschnitt)
- 24b: Rand
- 24c: stirnseitiger Rand
- 24d: seitlicher Rand
- 24e: Erhebung (Anlageabschnitt)
- 24f: Bördelrand
- 24j: verdoppelter Rand
- 24h: Kröpfung
- 26: Unterschale (Halbschale)
- 26a: Erhebung (Kontaktabschnitt)
- 26b: Rand
- 26c: stirnseitiger Rand
- 26d: seitlicher Rand
- 26e: Erhebung (Anlageabschnitt)
- 26g: Bördelung
- 26i: Einsenkung
- 28: Dichtung
- 30, 32: Kontaktebenen
- 34: Folienpaket
- 36, 38: Ableiterfahnen (Kollektoren)
- 36a, 38a: Ausklinkungen
- 40: Stütze
- 42: Dämpfung
- 44: Stütze
- 46: Dämpfung
- 48, 50: Polbleche
- 48a, 50a: Kontaktbereiche
- 52: Dichtung
- 54: Dichtung
- 55: Stütze
- 56, 58: Kontaktplatten
- 60, 62: Dichtungen
- 64, 66: Ausnehmungen
- 68: Kontaktfeder
- 70: Kulisse
- 72, 74: Ableiter
- 76: Dichtung
- 78: erste Kollektorfolie
- 78a: erste Beschichtung
- 78b: oberer Rand (freier Rand)
- 78c: unterer Rand (belegter Rand)
- 80: Separatorfolie
- 82: zweite Kollektorfolie
- 82a: zweite Beschichtung
- 82b: unterer Rand (freier Rand)
- 82c: oberer Rand (belegter Rand)
- 84: erste Elektrodenschicht
- 86: zweite Elektrodenschicht
- 90: Wickeldorn (Wickelkern)
- 90a: Ausnehmung
- 90b: Lasche (Ableiter)
- 90c: Isolierung
- 92: Ableiter
- 94: Schweißpunkte
- 96: Wickeldorn
- 98: Kontaktfeder
- 98a: freies Ende
- 98b: Mittelteil
- 100: Kontaktplatte
- 100a: Kerbe
- 100b: Isolierung
- 102: exotherme Lötfolie
- 104: Isolierpackung
- 106: Isolierstreifen
- 108: Überzug
- 110: Kontaktstütze
- 112: exotherme Lötfolie

- L: Länge der Zelle
- M: Mittelebene
- T: Dicke der Zelle
- W: Breite der Zelle

Es wird ausdrücklich darauf hingewiesen, dass vorstehende Bezugszeichenliste integraler Bestandteil der Beschreibung ist.

## Patentansprüche

1. Galvanische Zelle, mit einem aktiven Teil, einer Einhausung zur Aufnahme des aktiven Teils, und wenigstens zwei Polkontaktbereichen zur Kontaktierung des aktiven Teils von außerhalb der Einhausung, wobei der aktive Teil eine flache Folienanordnung mit elektrochemisch aktiven Materialien aufweist, wobei die Folienanordnung wenigstens eine erste Kollektorfolie und eine zweite Kollektorfolie aufweist, wobei die Einhausung ein erstes Einhausungsteil, das sich wenigstens im Wesentlichen entlang einer ersten Flachseite des aktiven Teils erstreckt, und ein zweites Einhausungsteil, das sich wenigstens im Wesentlichen entlang einer zweiten Flachseite des aktiven Teils erstreckt, aufweist, wobei das erste Einhausungsteil und das zweite Einhausungsteil den aktiven Teil aufnehmen, und wobei die Polkontaktbereiche jeweils mit den ersten oder den zweiten Kollektorfolien verbunden und von außerhalb der Einhausung kontaktierbar sind, wobei wenigstens eines, vorzugsweise beide, des ersten und des zweiten Einhausungsteils ein mittels eines Umformverfahrens hergestelltes, vorzugsweise tiefgezogenes Bauteil ist, von denen wenigstens eines vorzugsweise aus Blech oder Kunststoff besteht,
**dadurch gekennzeichnet,**
**dass** die Polkontaktbereiche durch Ableiter gebildet sind, die sich jeweils durch eine Nahtstelle zwischen dem ersten und dem zweiten Einhausungsteil hindurch erstrecken und die vorzugsweise gegen die Einhausungsteile isoliert sind, und dass sich die Ableiter außerhalb der Einhausung entlang einer Oberfläche wenigstens eines der Einhausungsteile erstrecken.

2. Galvanische Zelle nach Anspruch 1, **dadurch gekennzeichnet, dass** das erste und das zweite Einhausungsteil durch eine elastische, vorzugsweise elektrisch nichtleitende Masse stoffschlüssig miteinander verbunden sind.

3. Galvanische Zelle nach Anspruch 1 oder 2, **dadurch gekennzeichnet, dass** der aktive Teil Elektrodenkontaktbereiche aufweist, die stirnseitig, insbesondere an unterschiedlichen Stirnseiten oder an einer gleichen Stirnseite, von der Folienanordnung abragen und die vorzugsweise durch Abschnitte der Kollektorfolien gebildet sind.

4. Galvanische Zelle nach einem der vorstehenden Ansprüche, **dadurch gekennzeichnet, dass** wenigstens ein elastisches Bauteil vorgesehen ist, welches auf wenigstens einen der Elektrodenkontaktbereiche im Sinne einer elastischen Druckkraft einwirkt und einen Kontakt mit einem zugehörigen Polkontaktbereich durch Kraftschluss herstellt.

5. Galvanische Zelle nach einem der vorstehenden Ansprüche, **dadurch gekennzeichnet, dass** das wenigstens eine elastische Bauteil flächennormal im Sinne einer Druckkraft auf flächige ausgebildete Elektrodenkontaktbereiche wirkt.

6. Galvanische Zelle nach einem der vorstehenden Ansprüche, **dadurch gekennzeichnet, dass** das wenigstens eine elastische Bauteil in Richtung einer Stirnseite des aktiven Teils auf einen dort abragenden Elektrodenkontaktbereich bzw. dort abragende Elektrodenkkontaktbereiche im Sinne einer Druckkraft wirkt.

7. Galvanische Zelle nach einem der vorstehenden Ansprüche, **dadurch gekennzeichnet, dass** das wenigstens eine elastische Bauteil aus einem elektrisch leitenden Material hergestellt ist und im Stromweg zwischen einem Polkontaktbereich und einem Elektrodenkontaktbereich angeordnet ist.

8. Galvanische Zelle nach einem der vorstehenden Ansprüche, **dadurch gekennzeichnet, dass** das wenigstens eine elastische Bauteil einen Elektrodenkontaktbereich zwischen sich und einem Polkontaktbereich einklemmt.

9. Galvanische Zelle nach einem der vorstehenden Ansprüche, **dadurch gekennzeichnet, dass** die Polkontaktbereiche durch das erste und das zweite Einhausungsteil, die elektrisch voneinander isoliert sind, gebildet sind, wobei vorzugsweise Erhebungen in den Flachseiten der Einhausungsteile als Kontaktbereiche vorgesehen sind.

10. Galvanische Zelle nach einem der vorstehenden Ansprüche, **dadurch gekennzeichnet, dass** die Folienanordnung eine flache Stapelanordnung ist.

11. Galvanische Zelle nach einem der vorstehenden Ansprüche, **dadurch gekennzeichnet, dass** die Folienanordnung ein flacher Wickel ist, der insbesondere auf einem Wickelkern aufgewickelt ist.

12. Galvanische Zelle nach Anspruch 11, **dadurch gekennzeichnet, dass** der Wickelkern eine Funktion eines Wärmeleitelements und/oder eines Stromleitelements aufweist.

13. Galvanische Zelle nach einem der vorstehenden Ansprüche, **dadurch gekennzeichnet, dass** an wenigstens eine, vorzugsweise beide Seiten der ersten Kollektorfolie angrenzend ein erstes Elektrodenmaterial, das im Sinne einer ersten Polarität elektrochemisch aktiv ist, angeordnet, wobei das erste Elektrodenmaterial vorzugsweise als Schicht auf der ersten Kollektorfolie aufgebracht ist, wobei an wenigstens eine, vorzugsweise beide Seiten der zweiten Kollektorfolie angrenzend ein zweites Elektrodenmaterial, das im Sinne einer zweiten Polarität elektrochemisch aktiv ist, angeordnet ist, wobei das zweite Elektrodenmaterial vorzugsweise als Schicht oder Schichten auf der zweiten Kollektorfolie aufgebracht ist, wobei zwischen erstem Elektrodenmaterial und zweitem Elektrodenmaterial benachbarter Kollektorfolien ein Separatormaterial angeordnet ist.

## Claims

1. Galvanic cell, having an active part, a housing to receive the active part, and at least two pole contact regions for contacting of the active part from outside of the housing, wherein the active part has a flat foil arrangement with electrochemically active materials, wherein the foil arrangement has at least a first collector foil and a second collector foil, wherein the housing has a first housing part which extends at least substantially along a first flat side of the active part, and a second housing part which extends at least substantially along a second flat side of the active part, wherein the first housing part and the second housing part receive the active part, and wherein the pole contact regions are respectively connected to the first or the second collector foils and can be contacted from outside of the housing, wherein at least one, preferably both, of the first and the second housing parts is / are a component produced by means of a reshaping process, preferably a deep-drawn component, of which at least one preferably consists of sheet metal or plastic,
**characterised in that**
the pole contact regions are formed by diverters which extend respectively through a seam point between the first and the second housing part and which are preferably insulated with respect to the housing parts, and the diverters extend outside of the housing along a surface of at least one of the housing parts.

2. Galvanic cell according to claim 1, **characterised in that** the first and the second housing part are interconnected in a substance-bonding manner by an elastic, preferably non-conductive, mass.

3. Galvanic cell according to claim 1 or 2, **characterised in that** the active part has electrode contact regions which project away from the foil arrangement on end faces, in particular on different end faces or on the same end face, and which are preferably formed by sections of the collector foils.

4. Galvanic cell according to one of the preceding claims, **characterised in that** at least one elastic component is provided which acts on at least one of the electrode contact regions in the sense of an elastic compressive force and produces a contact with an associated pole contact region through a force-locking connection.

5. Galvanic cell according to one of the preceding claims, **characterised in that** the at least one elastic component acts in a surface normal manner in the sense of a compressive force on flat electrode contact regions.

6. Galvanic cell according to one of the preceding claims, **characterised in that** the at least one elastic component acts in the direction of an end face of the active part on an electrode contact region or regions projecting away there in the sense of a compressive force.

7. Galvanic cell according to one of the preceding claims, **characterised in that** the at least one elastic component is produced from an electrically conductive material and is arranged in the current path between a pole contact region and an electrode contact region.

8. Galvanic cell according to one of the preceding claims, **characterised in that** the at least one elastic component clamps in an electrode contact region between it and a pole contact region.

9. Galvanic cell according to one of the preceding claims, **characterised in that** the pole contact regions are formed by the first and the second housing part which are electrically insulated from each other, wherein raised parts are preferably provided in the flat sides of the housing parts as contact regions.

10. Galvanic cell according to one of the preceding claims, **characterised in that** the foil arrangement is a flat stack arrangement.

11. Galvanic cell according to one of the preceding claims, **characterised in that** the foil arrangement is a flat winding which is wound in particular on a winding core.

12. Galvanic cell according to claim 11, **characterised in that** the winding core has a function of a heat conducting element and / or a current conducting element.

13. Galvanic cell according to one of the preceding claims, **characterised in that** adjacent to at least one, preferably both, side(s) of the first collector foil a first electrode material which is electrochemically active in the manner of a first polarity is provided, wherein the first electrode material is preferably applied as a coating on the first collector foil, wherein adjacent to at least one, preferably both, side(s) of the second collector foil a second electrode material which is electrochemically active in the manner of a second polarity is provided, wherein the second electrode material is preferably applied as a coating or coatings on the second collector foil, wherein a separator material is arranged between the first electrode material and second electrode material of adjacent collector foils.

## Revendications

1. Cellule galvanique, dotée d'un élément actif, d'un boîtier destiné à loger l'élément actif, et au moins deux zones de contact de pôle destinées à la mise en contact de l'élément actif à partir de l'extérieur du boîtier, l'élément actif présentant un agencement de feuille plat comprenant des matériaux actifs électrochimiquement, L'agencement de feuille présentant au moins une première feuille de collecte et une seconde feuille de collecte, le boîtier présentant une première partie de logement, qui s'étend au moins sensiblement le long d'une première face plate de l'élément actif, et une seconde partie de logement, qui s'étend au moins sensiblement le long d'une seconde face plate de l'élément actif, la première partie de logement et la seconde partie de logement logeant l'élément actif, et chacune des zones de contact de pôle étant reliée à la première ou à la seconde feuille de collecte et pouvant être mise en contact à partir de l'extérieur du logement, au moins l'une, de préférence les deux parmi, la première et la seconde partie de logement étant un élément fabriqué selon un procédé de façonnage, de préférence un élément embouti, dont au moins une étant composée de préférence en tôle ou en matière plastique, **caractérisée en ce que** les zones de contact de pôle sont formées par des dérivateurs, qui s'étendent chacun par une jonction entre la première et la seconde partie de logement et qui de préférence sont isolés des éléments de logement et **en ce que** les dérivateurs s'étendent à l'extérieur du boîtier le long d'une surface au moins d'une des parties de logement.

2. Cellule galvanique selon la revendication 1, **caractérisée en ce que** la première et la seconde partie de logement sont reliées conjointement par complémentarité de matière au moyen d'une masse non électroconductrice de préférence élastique.

3. Cellule galvanique selon la revendication 1 ou la revendication 2, **caractérisée en ce que** l'élément actif présente des zones de contact d'électrode, qui dépassent face avant, en particulier sur les différentes faces avant ou sur une face avant identique, de l'agencement de feuille, et qui sont de préférence formées au moyen de sections des feuilles de contact.

4. Cellule galvanique selon l'une quelconque des revendications précédentes, **caractérisée en ce qu'**il est prévu au moins un élément élastique qui agit sur au moins l'une des zones de contact d'électrode au sens d'une force de pression élastique et produit un contact avec une zone de contact de pôle associée par liaison par adhérence.

5. Cellule galvanique selon l'une quelconque des revendications précédentes, **caractérisée en ce que** l'au moins un élément élastique agit dans la ligne de contact au sens d'une force de pression sur des zones de contact d'électrode plates.

6. Cellule galvanique selon l'une quelconque des revendications précédentes, **caractérisée en ce que** l'au moins un élément élastique agit en direction d'une face avant de l'élément actif sur une zone de contact d'électrode y dépassant ou sur des zones de contact d'électrode y dépassant au sens d'une force de pression.

7. Cellule galvanique selon l'une quelconque des revendications précédentes, **caractérisée en ce que** l'au moins un élément élastique est fabriqué à partir d'un matériau électroconducteur et est disposé sur un trajet de courant entre une zone de contact de pôle et une zone de contact d'électrode.

8. Cellule galvanique selon l'une quelconque des revendications précédentes, **caractérisée en ce que** l'au moins un élément élastique serre une zone de contact d'électrode entre lui et une zone de contact de pôle.

9. Cellule galvanique selon l'une quelconque des revendications précédentes, **caractérisée en ce que** les zones de contact de pôle sont formées par la première et la seconde partie de logement qui sont isolées électriquement l'une de l'autre, de préférence des parties saillantes étant disposées dans les faces plates des parties de logement comme zones de contact.

10. Cellule galvanique selon l'une quelconque des revendications précédentes, **caractérisée en ce que** l'agencement de feuille est un agencement empilé plat.

11. Cellule galvanique selon l'une quelconque des revendications précédentes, **caractérisée en ce que** l'agencement de feuille est un enroulement plat, qui est enroulé en particulier sur un noyau d'enroulement.

12. Cellule galvanique selon l'une quelconque des revendications précédentes, **caractérisée en ce que** le noyau d'enroulement présente une fonction d'un élément thermoconducteur et/ou d'un élément électroconducteur.

13. Cellule galvanique selon l'une quelconque des revendications précédentes, **caractérisée en ce que** sur au moins une, de préférence deux faces à proximité de la première feuille de collecteur est disposé un premier matériau d'électrode, qui au sens d'une première polarité est actif électrochimiquement, le première matériau d'électrode étant appliqué de préférence en tant que couche sur la première feuille de collecte, sur au moins une, de préférence sur les deux faces à proximité de la seconde feuille de collecte étant disposé, un second matériau d'électrode qui au sens d'une seconde polarité est actif électrochimiquement, le second matériau d'électrode étant appliqué de préférence en tant que couche ou couches sur la seconde feuille de collecte, un matériau de séparation étant disposé entre le premier matériau d'électrode et le second matériau d'électrode des feuilles de collecte adjacentes.
